# EUROPÄISCHE PATENTSCHRIFT

(11) **EP 0 559 611 B1**
(45) Veröffentlichungstag und Bekanntmachung des Hinweises auf die Patenterteilung: **17.11.1999**
(21) Anmeldenummer: 93810124.3
(22) Anmeldetag: 23.02.1993
(51) Int. Cl.: C08K 5/3435, C09B 67/00, C09B 67/20, C08K 5/3445, C08K 5/42, C08K 5/3492

(54) **Stabilisierung von Pyrrolopyrrolpigmenten**
Stabilization of pyrrolopyrrolpigments
Stabilisation de pigments du type pyrrolopyrrole

(30) Priorität: 05.03.1992 CH 69292
(43) Veröffentlichungstag der Anmeldung: 08.09.1993
(73) Patentinhaber: Ciba Specialty Chemicals Holding Inc., 4057 Basel (CH)
(72) Erfinder: Chassot, Laurent, Dr., CH-1724 Praroman (CH)

(56) Entgegenhaltungen:
- EP-A- 0 284 800
- FR-A- 2 252 372

## Beschreibung

Die vorliegende Erfindung betrifft die Stabilisierung von Pyrrolopyrrolpigmenten gegen den Einfluss von Licht und Wetter durch Zusatz einer Nitroxylverbindung.

Pyrrolo-[3,4-c]-pyrrolpigmente sind seit einigen Jahren bekannt und werden z.B. in US-Patent 4 415 685 und US-Patent 4 579 949 beschrieben. Einige davon haben sich als hochwertige Pigmente bewährt. Obwohl sie bereits eine sehr gute Licht- und Wetterbeständigkeit zeigen, ist nun gefunden worden, dass diese überraschenderweise noch verbessert werden können, insbesondere bei transparenten Pigmentformen, wenn die Pigmente mit einer Nitroxylverbindung vermischt werden.

Nitroxylverbindungen sind aus verschiedenen Publikationen als Stabilisatoren bekannt. In JP-A 75-58141 werden unter vielen anderen HALS (Hindered Amine Light Stabiliser) auch Nitroxylverbindungen beschrieben, die zusammen mit UV-Absorbern zur Stabilisierung von pigmentierten Kunststoffen gegen den Einfluss von Licht dienen. Es wird ausgeführt, dass die Wirkung der UV-Absorber als Lichtstabilisatoren für den Kunststoff durch die Pigmente beeinträchtigt wird, dass aber diese Beeinträchtigung durch einen HALS vermindert werden kann. Bevorzugt werden HALS, die keine Nitroxylgruppe enthalten. Aus EP-A 309 401 ist der Einsatz von N-hydroxy-HALS zur Verhinderung von Mangelhaftigkeiten, wie Brüchigwerden, Rissbildung, Korrosion, Erosion, Glanzverlust, Kreidung und Vergilbung von Beschichtungen, bekannt. In US-Patent 3 970 632 wird eine Polymermasse enthaltend ein Chinophthalonpigment, welche dank Zugabe von HALS eine hohe Lichtbeständigkeit und Verblassungsfestigkeit aufweist, beschrieben. Obwohl ganz generisch auch Nitroxylverbindungen mit umfasst werden, sind spezifisch nur nitroxylgruppenfreie HALS aufgeführt. Aus JP-A 82-119941 sind pigmentierte Polymere enthaltend einen UV-Absorber und einen HALS (ohne Hinweis auf Nitroxylverbindungen) zur Vorbeugung von Verblassung bekannt. In JP-A 90-99323 werden gegen die Verblassung durch die Einwirkung von Licht stabilisierte Laminate beschrieben, die in einer Zwischenschicht einen in einem organischen Lösungsmittel löslichen Farbstoff (irrtümlicherweise als Pigment bezeichnet) enthalten, der in gelöster Form mit einer Nitroxylverbindung behandelt wurde.

Aus diesen Publikationen ergibt sich für den Fachmann die Lehre, dass bei mit löslichen Farbstoffen gefärbten Kunststoffen unter bestimmten Bedingungen, z.B. in Zwischenschichten von Laminaten, bei Behandlung der gelösten Farbstoffe mit einer Nitroxylverbindung, die Verblassung durch Einwirkung von Licht vermindert werden kann, dass der gleiche Effekt aber bei mit Pigmenten pigmentierten Kunststoffen, zusammen mit der Stabilisierung des Kunststoffes, durch Beimischung eines nitroxylgruppenfreien HALS erzielt wird.

Es ist nun gefunden worden, dass die bereits hohe Licht- und Wetterbeständigkeit der Pyrrolopyrrolpigmente ganz überraschend durch Vennischung beziehungsweise Beschichtung der Pigmentpartikel mit einer Nitroxylverbindung noch verbessert werden kann.

Die vorliegende Erfindung betrifft demnach lichtstabilisierte Pigmentzusammensetzungen enthaltend
a) mindestens ein Pyrrolo-[3,4-c]-pyrrolpigment der Formel 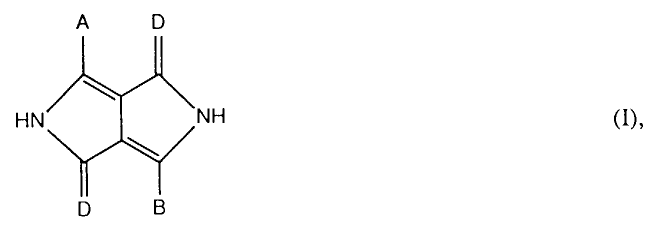 worin A und B unabhängig voneinander isocyclische oder heterocyclische aromatische Reste und D einen Sauerstoff- oder Schwefelatom bedeuten, und
b) 1 bis 100 Gew.%, bezogen auf das Pigment, einer Nitroxylverbindung der Formel 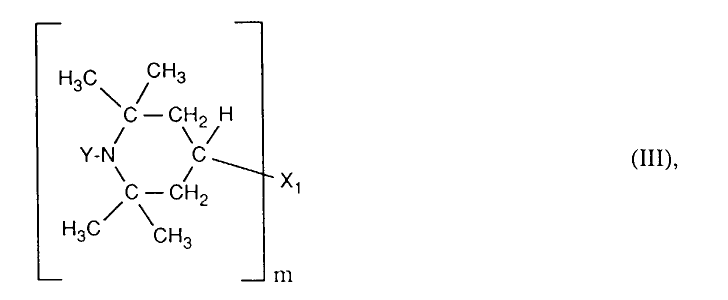 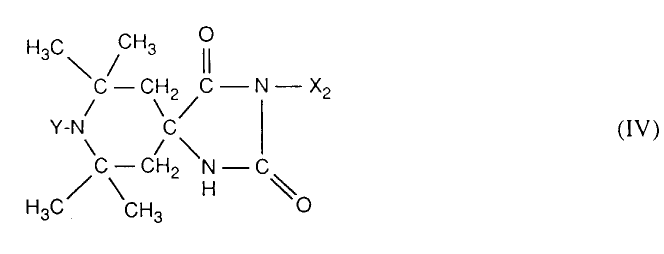 oder 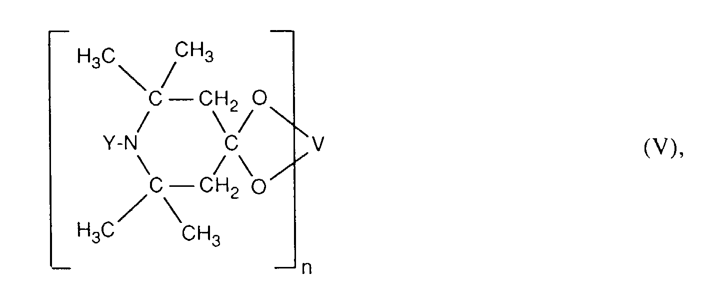 worin
   - m: 1, 2 oder 3 ist,
   - X₁,: bei m = 1, C₁-C₁₈-Alkyl, -OCO-R₁₆, -NR₁₅-COR₁₆ oder 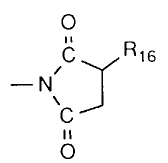 ist, worin
   R₁₅ Wasserstoff oder C₁-C₁₈-Alkyl ist und R₁₆ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
   bei m = 2, eine Gruppe -OCO-(CH₂)ₚ-OCO- oder -NR₁₅CO-(CH₂)ₚ-CONR₁₅-, worin
   p eine Zahl zwischen 2 und 8 ist, 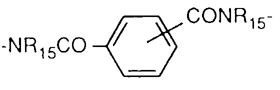 oder 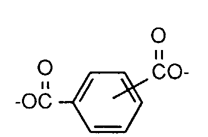 ist und
   bei m = 3, eine Gruppe 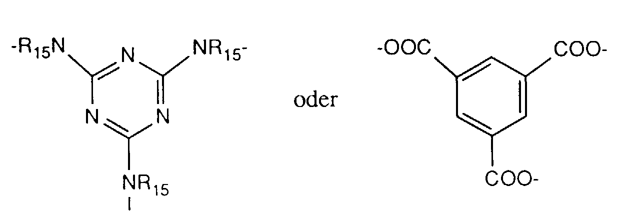 bedeutet,
   - X₂: C₁-C₁₈-Alkyl ist,
   - n: die Zahl 2,
   - V: die Gruppe (-CH₂)₂C(CH₂-)₂ oder 〉C〈 bedeutet und
   - Y: O• ist oder eines Säureadditionssalzes davon.

Die Pyrrolo-[3,4-c]-pyrrolpigmente sind bekannt. Sie sind beispielsweise ausfiihrlich in US-Patent 4 415 685, Spalten 1, 2 und 3 sowie insbesondere in den Beispielen 1, 6 und 27 bis 49, und in US-Patent 4 579 949, insbesondere in den Beispielen 1 bis 46, beschrieben.

Bei den Nitroxylverbindungen handelt es sich ebenfalls um bekannte Verbindungen. Sie werden z.B. in folgenden Publikationen offenbart:
- Chemical Reviews, 1978, Vol. 78, No. 1, 37-64. (J.F.W. Keana, Newer Aspects of the Synthesis and Chemistry of Nitroxide Spin Labels), insbesondere die Seiten 40-47;
- Imidazoline Nitroxides, 1988, Vol. 1, 5-23 (L.B. Volodarsky, I.A. Grigorev, Synthesis of Heterocyclic Nitroxides);
- Tetrahedron Letters, Vol. 29 No. 37, 4677-4680, 1988 (R.W. Murray, M. Singh, A Convenient High Yield Synthesis of Nitroxides);
- J. Org. Chem, 1991, Vol. 56, 6110-6114 (Z. Ma, J.M.Bobbitt, Organic Oxoammonium Salts), insbesondere die Beispiele auf Seite 6114;
- Journal of Polymer Science (Polymer Chemistiry Edition), 1974, Vol. 12, 1407-1420 (T. Kurosaki et al., Polymers Having Stable Radicals), insbesondere die Beispiele S.S. 1417-1419;
- JP-A 90-99323 (11.4.90), insbesondere die Beispiele 1-34;
- US-Patent 3 536 722, Formel I und insbesondere die Beispiele 1-6;
- US-Patent 3 936 456, Spalten 1 und 2 und insbesondere die Beispiele 7 und 8;
- US-Patent 3 971 757, Formel I und Beispiel 12;
- US-Patent 3 966 711, Formel I und Beispiel 7;
- US-Patent 4 131 599, Spalte 1 und 2 und Beispiel 5;
- US-Patent 5 001 233, Beispiele.

Von besonderem Interesse sind Pigmentzusammensetzungen, in denen ein Pyrrolo-[3,4-c]-pyrrolpigment der Formel I eingesetzt wird, worin A und B unabhängig voneinander fiir eine Gruppe der Formel 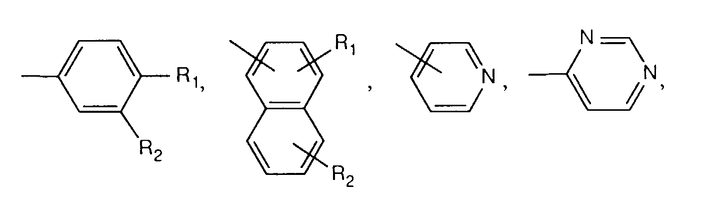 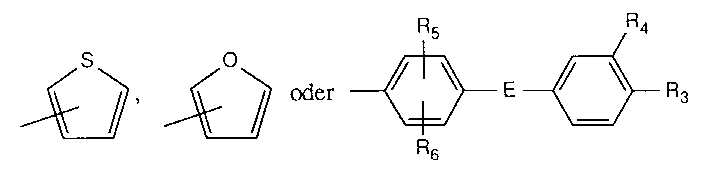 stehen, worin
R₁ und R₂ unabhängig voneinander Wasserstoff, Halogen, C₁-C₆-Alkyl, C₁-C₁₈-Alkoxy, C₁-C₁₈-Alkylmercapto, C₁-C₁₈-Alkylamino, -CN, -NO₂, -Phenyl, Trifluormethyl, C₅-C₆-Cycloalkyl, Imidazolyl, Pyrrazolyl, Triazolyl, Piperazinyl, Pyrrolyl, Oxazolyl, Benzoxazolyl, Benzthiazolyl, Benzimidazolyl, Morpholinyl, Piperidinyl oder Pyrrolidinyl bedeuten,
E -O-, -S-, -SO-, -SO₂- oder -NR₇- ist,
R₃ und R₄ unabhängig voneinander Wasserstoff, analogen, C₁-C₆-Alkyl, C₁-C₁₈Alkoxy oder -CN sind, R₅ und R₆ unabhängig voneinander Wasserstoff, Halogen oder C₁-C₆-Alkyl und R₇ Wasserstoff oder C₁-C₆-Alkyl bedeuten.

Bedeuten etwaige Substitutenten Halogen, dann handelt es sich z.B. um Jod, Fluor, insbesondere Brom und bevorzugt Chlor;
bei C₁-C₆-Alkyl handelt es sich beispielsweise um Methyl, Ethyl, n-Propyl, Isopropyl, n-Butyl, sec.-Butyl, tert.-Butyl, n-Amyl, tert.-Amyl, Hexyl.
C₁-C₁₈-Alkylmercapto steht beispielsweise für Methylmercapto, Ethylmercapto, Propylmercapto, Butylmercapto, Octylmercapto, Decylmercapto, Hexadecylmercapto oder Octadecylmercapto;
C₁-C₁₈-Alkylamino bedeutet z.B. Methylamino, Ethylamino, Propylamino, Hexylamino, Decylamino, Hexadecylamino oder Octadecylamino.
C₅-C₆-Cycloalkyl steht für Cyclopentyl und insbesondere für Cyclohexyl.

Bedeuten etwaige Substituenten C₁-C₄-Alkyl, so handelt es sich z.B. um Methyl, Ethyl, n-Propyl, Isopropyl, n-Butyl, sec.-Butyl, tert.-Butyl, und bei C₁-C₁₈-Alkyl zusätzlich z.B. um n-Amyl, tert.-Amyl, Hexyl, Heptyl, Octyl, 2-Ethylhexyl, Decyl, Dodecyl, Tetradecyl, Hexadecyl oder Octadecyl;
C₁-C₄-Alkoxy bedeutet, z.B. Methoxy, Ethoxy, n-Propoxy, Isopropoxy, Butyloxy und C₁-C₁₈-Alkoxy zusätzlich z.B. Hexyloxy, Decyloxy, Dodecyloxy, Hexadecyloxy oder Octadecyloxy;

Besonders geeignet sind Pyrrolo-[3,4-c]-pyrrolpigmente der Formel I, worin A und B unabhängig voneinander eine Gruppe der Formel 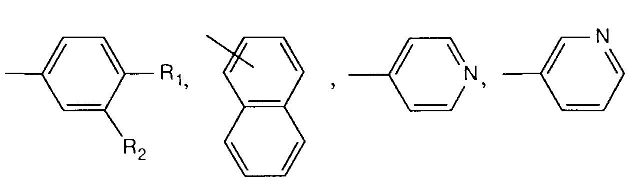 oder 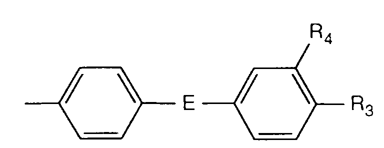 sind,
worin R₁ und R₂ unabhängig voneinander Wasserstoff, Chlor, Brom, C₁-C₄-Alkyl, C₁-C₆-Alkoxy, C₁-C₆-Alkylaiiiino, CN oder Phenyl bedeuten,
E -O-, -NR₇- oder -SO₂- ist,
R₃ und R₄ Wasserstoff und R₇ Wasserstoff, Methyl oder Ethyl bedeuten und D ein Sauerstoffatom ist,
und insbesondere jene der Formel 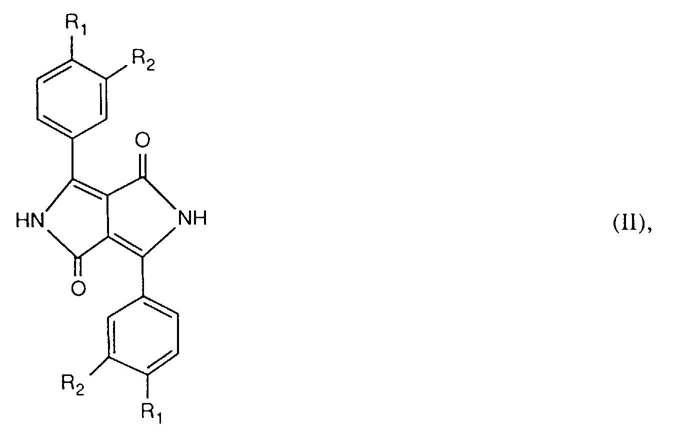 worin R₁ und R₂ unabhängig voneinander Wasserstoff, Methyl, tert.-Butyl, Chlor, Brom, CN oder Phenyl bedeuten.

Bevorzugt werden Pyrrolo-[3,4-c]-pyrrolpigmente in feiner, d.h. in transparenter Form mit einer durchschnittlichen Partikelgrösse von 0,005 bis 0,1 µm, bevorzugt von 0,01 bis 0,07 µm, verwendet.

Die Nitroxylverbindung wird vorzugsweise in einer Menge von 5-100 Gew.%, bezogen auf das Pigment, eingesetzt.

Es können auch anorganische oder organische Salze von Nitroxylverbindungen verwendet werden, die durch Addition von Säuren in maximal den Nitroxylgruppen äquivalenten Mengen entstehen. Solche Säuren können anorganische Säuren, wie z.B. Schwefel-, Salz- oder Phosphorsäure, oder organische Carbonsäuren, wie Ameisen-, Essig-, Oxal-, Malein-, Benzoe- oder Salicylsäure, organische Sulfonsäuren wie Methan- oder p-Toluolsulfonsäure oder organische phosphorhaltige Säuren, wie Benzolphosphonsäure, Methanphosphonsäure oder Benzolphosphinsäure, sein.

Bevorzugt werden Nitroxylverbindungen der Formel III oder IV, worin m 1 ist und X₁ Benzoyloxy oder Naphthoyloxy bedeutet und X₂ C₈-C₁₈-Alkyl ist.

Wie oben bereits erwähnt werden die Pyrrolo-[3,4-c]-pyrrolpigmente durch die Beimischung einer Nitroxylverbindung gegen die Einwirkung von Licht und Wetter, die sowohl zur Verblassung, gegebenenfalls aber auch zum Nachdunkeln der Ausfärbungen führen kann, stabilisiert. Die erfindungsgemässe Beimischung der Nitroxylverbindung zum Pigment hat sich in beiden Fällen als wirksam, d.h. als stabilisierend, erwiesen. Ein weiterer Gegenstand der Erfindung ist demnach ein Verfahren zur Licht- und Wetterstabilisierung von Pyrrolo-[3,4-c]-pyrrolpigmenten der Formel 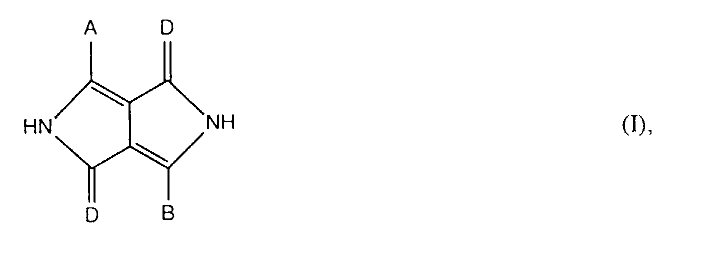 worin A und B unabhängig voneinander isocyclische oder heterocyclische aromatische Reste und D einen Sauerstoff- oder Schwefelatom bedeuten, durch Vermischung oder Beschichtung der Pigmentpartikel mit 1 bis 100 Gew.%, bezogen auf das Pigment, einer Nitroxylverbindung der Formel III, IV oder V.

Dies kann nach folgenden verschiedenen Methoden erfolgen:
- Die Nitroxylverbindung wird in der gewünschten Menge in einem organischen Lösungsmittel gelöst. Das Pigment wird nach üblichen Methoden in dieser Lösung suspendiert und die erhaltene Suspension wird gegebenenfalls in einer konventionellen Mühle vermahlen. Das Pigmentgemisch wird durch abdestillieren des Lösungsmittels isoliert und anschliessend getrocknet;
- Die erforderiche Menge Nitroxylverbindung wird, in einem organischen Lösungsmittel gelöst, einer nach üblichen Methoden hergestellten Pigmentsuspension zugegeben und danach, durch Zugabe eines Lösungsmittels, in welchem sie nicht löslich ist, z.B. Wasser, ausgefällt und mitsuspendiert. Die Suspension wird anschliessend filtriert und die Pigmentmischung nach üblichen Methoden isoliert;
- Vorzugsweise werden allerdings das Pigment und die Nitroxylverbindung entweder vorgemischt oder getrennt in der gewünschten Menge in das zu pigmentierende Substrat nach üblichen Methoden eingearbeitet.

Die erfindungsgemässen Pigmentzusammensetzungen eignen sich ausgezeichnet als Pigmente zum Färben von hochmolekularem organischem Material, insbesondere, wenn hohe Anforderungen an die Licht- und Wetterbeständigkeit gestellt werden.

Hochmolekulare organiche Materialien, die mit den erfindungsgemässen Pigmentzusammensetzungen pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Pigmentzusammensetzungen zum Einfärben von Polyvinylchlorid und Polyolefinen, wie Polyethylen und Polypropylen, sowie zum Pigmentieren von Lacken, Anstrichstoffen und Druckfarben. Dank ihrer hohen Lichtbeständigkeit eignen sie sich aber auch sehr gut für den Einsatz in elektrophotographischen Materialien (z.B. Photozellen), Farbfiltern (z.B. Flüssigkristallanzeigen), Informationsspeicherungsmaterialien ("optical disc"), nicht linearer Optik und in optischen Begrenzern ("optical limiters").

Die erfindungsgemässen Pigmentzusammensetzungen eignen sich aber vorzugsweise zum Färben von wässrigen und/oder lösungsmittelhaltigen Lacken, insbesondere Automobillacken. Ganz besonders bevorzugt ist ihre Verwendung für Effektlackierungen, bei denen transparente organische Pigmente eingesetzt werden.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen.

Bezogen auf das zu pigmentierende hochmolekulare organische Material kann man die erfindungsgemässen Pigmentzusammmensetzungen in einer Menge von 0,01 bis 40 Gew.%, vorzugsweise von 0,1 bis 20 Gew.%, einsetzen.

Die Pigmentierung der hochmolekularen organischen Substanzen mit den erfindungsgemässen Pigmentzusammensetzungen erfolgt beispielsweise derart, dass man eine solche Pigmentzusammensetzung gegebenenfalls in Form von Masterbatches, oder die einzelnen Komponenten diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentzusammensetzungen in die Polymeren eingearbeitet werden. Zwecks Erzielung verschiedener Farbtöne ist es ferner möglich, den hochmolekularen organischen Stoffen neben den erfindungsgemässen Pigmentzusammensetzungen noch Füllstoffe beziehungsweise andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert beziehungsweise gelöst. Man kann dabei so verfahren, dass man die einzelnen Komponenten für sich oder auch mehrere gemeinsam dispergiert beziehungsweise löst, und erst hierauf alle Komponenten zusammenbringt.

In Färbungen, beispielsweise von Lacken, Polyvinylchlorid oder Polyolefinen, zeichnen sich die erfindungsgemässen Pigmentzusammensetzungen durch gute allgemeine Pigmenteigenschaften, wie gute Dispergierbarkeit, hohe Farbstärke und Reinheit, gute Migrations-, Hitze- und insbesondere Licht- und Wetterbeständigkeit aus.

Die nachfolgenden Beispiele erläutern die Erfindung. Darin bedeuten Teile Gewichtsteile, sofern nichts anderes angegeben ist.

### Beispiele 1-25: 0,9 g eines roten Pigments der Formel

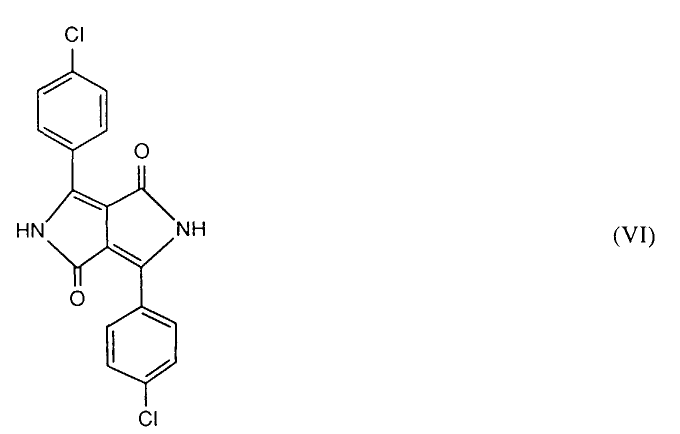

und 0,1 g einer Nitroxylverbindung der Formel 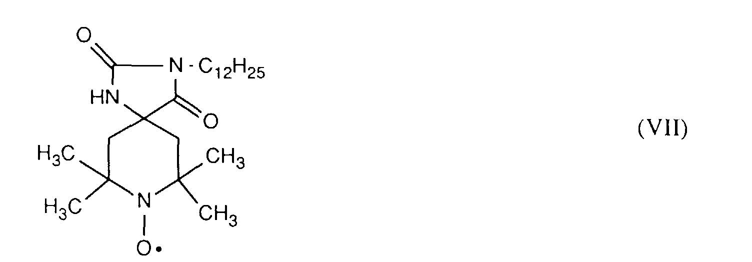 werden in 25 ml Methylenchlorid durch Behandlung mit Ultraschall während 3 Minuten suspendiert. Dann wird das Lösungsmittel abdestilliert und der Rückstand wird getrocknet (Methode A).

Das erhaltene stabilisierte Pigment wird wie folgt in einen Alkyd-Melamin-Einbrennlack eingearbeitet.

0,4 g Pigment/Nitroxyl-Gemisch, 7,6 g TiO₂, 9 ml Methylisobutylketon und 30 g Einbrennlack bestehend aus 66,5 Teilen Alkydharz ® ALKYDAL F27 (Bayer AG), 24,4 Teilen Melaminharz ®MAPRENAL TTK (Hoechst AG), 2,1 Teilen Xylol, 4,0 Teilen Ethylenglykol und 1,0 Teil Silikonöl (1 %ig in Xylol) werden nach üblichen Methoden vermischt. Der erhaltene Farblack wird auf Aluminiumbleche ausgezogen und 30 Minuten bei 130°C eingebrannt.

Weitere Lackausfärbungen werden in der genau gleichen Weise hergestellt, mit der einzigen Ausnahme, dass anstelle der Nitroxylverbindung der Formel VII die gleiche Gewichtsmenge der in der nachfolgenden Tabelle 1 angegebenen Nitroxylverbindungen eingesetzt wird.

Eine Kontroll-Lackausfärbung wird ebenfalls in der gleichen Weise hergestellt, mit der Ausnahme, dass das Pigment ohne Zusatz von Nitroxylverbindung eingesetzt wird.

Die Wetterbeständigkeit der erhaltenen Lackausfärbungen wird gemäss WOM-Test nach DIN 53387 nach 500 Stunden Bewitterung bestimmt. Bei allen aufgeführten Beispielen kann eine bessere Wetterbeständigkeit, als bei der Kontroll-Lackausfärbung nachgewiesen werden.

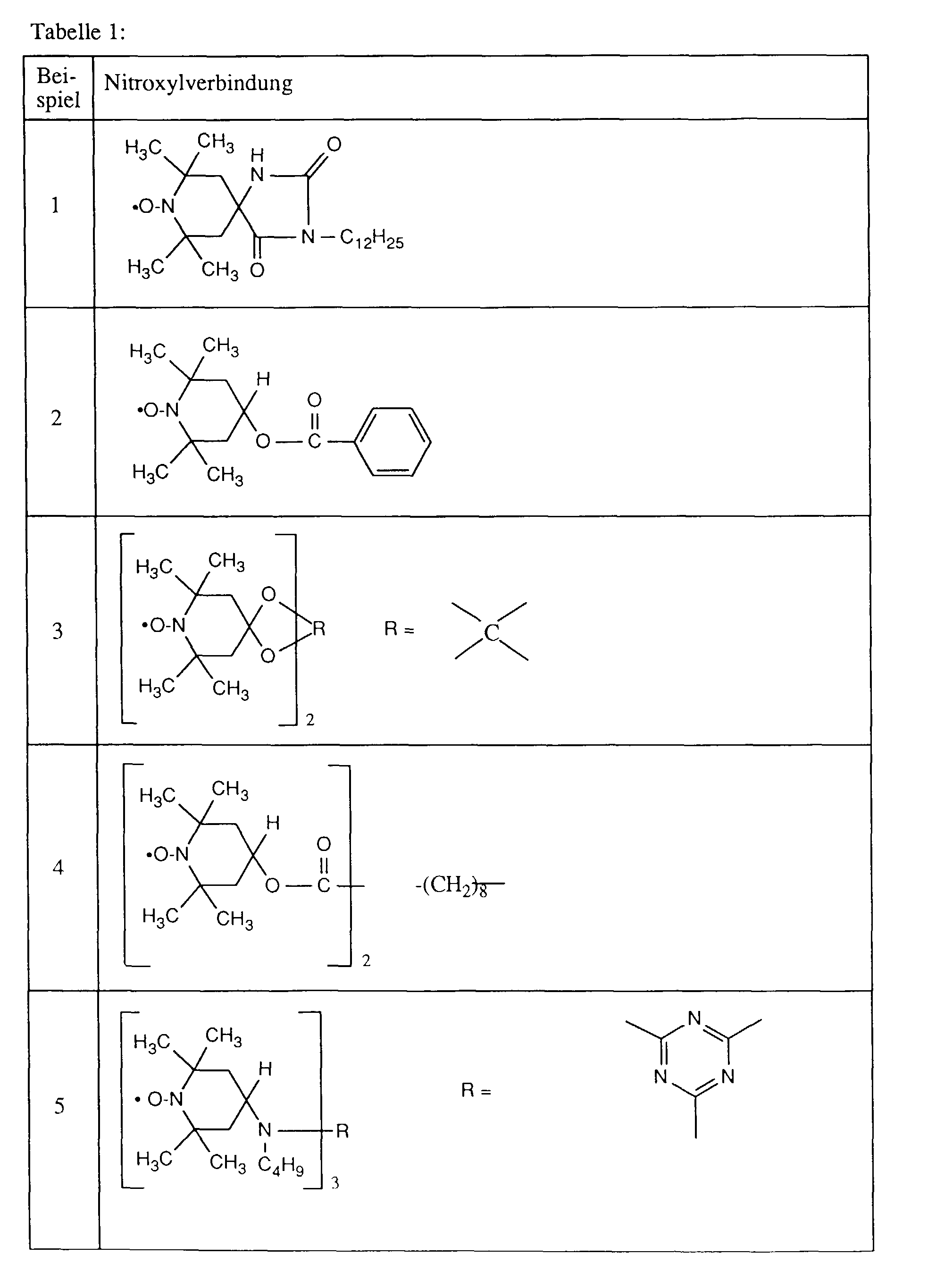

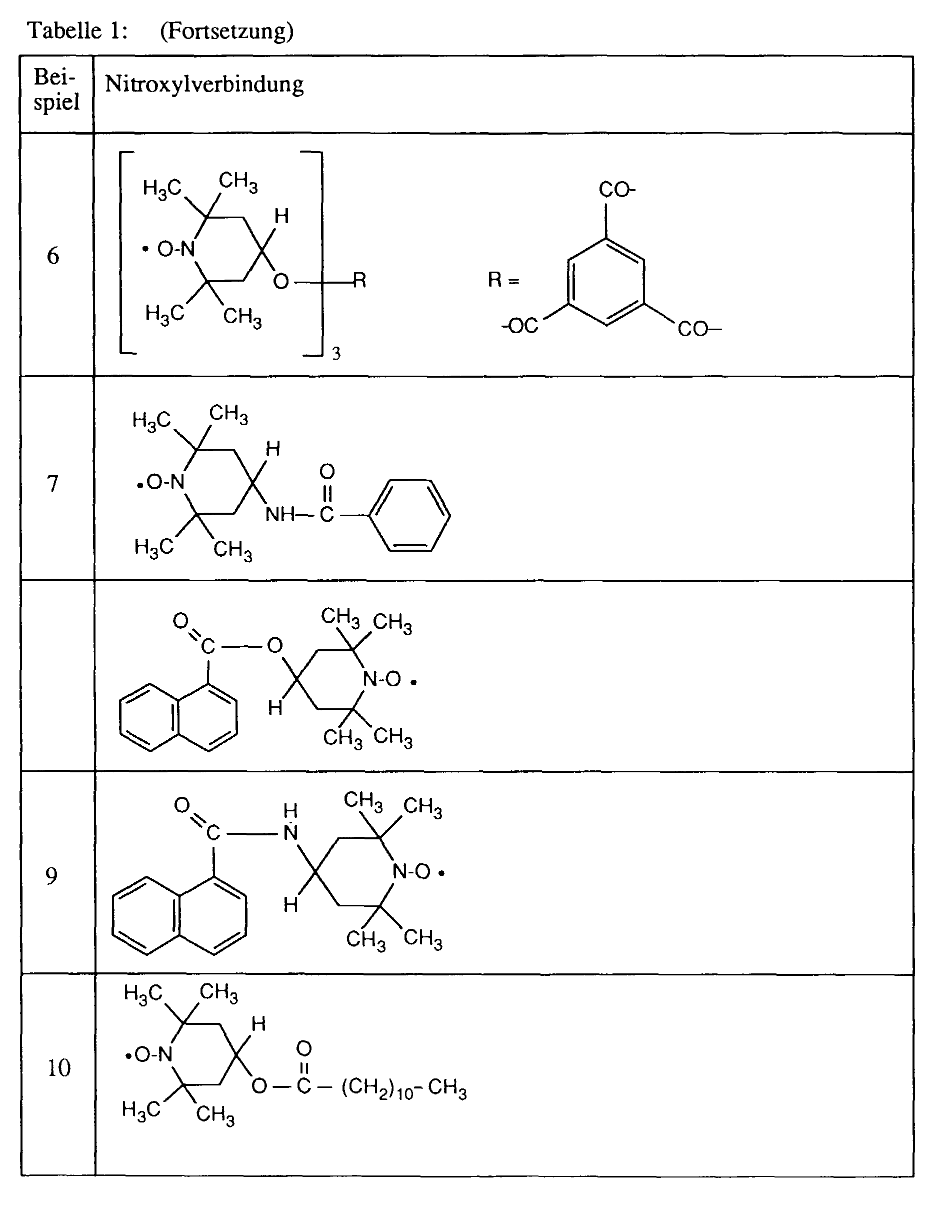

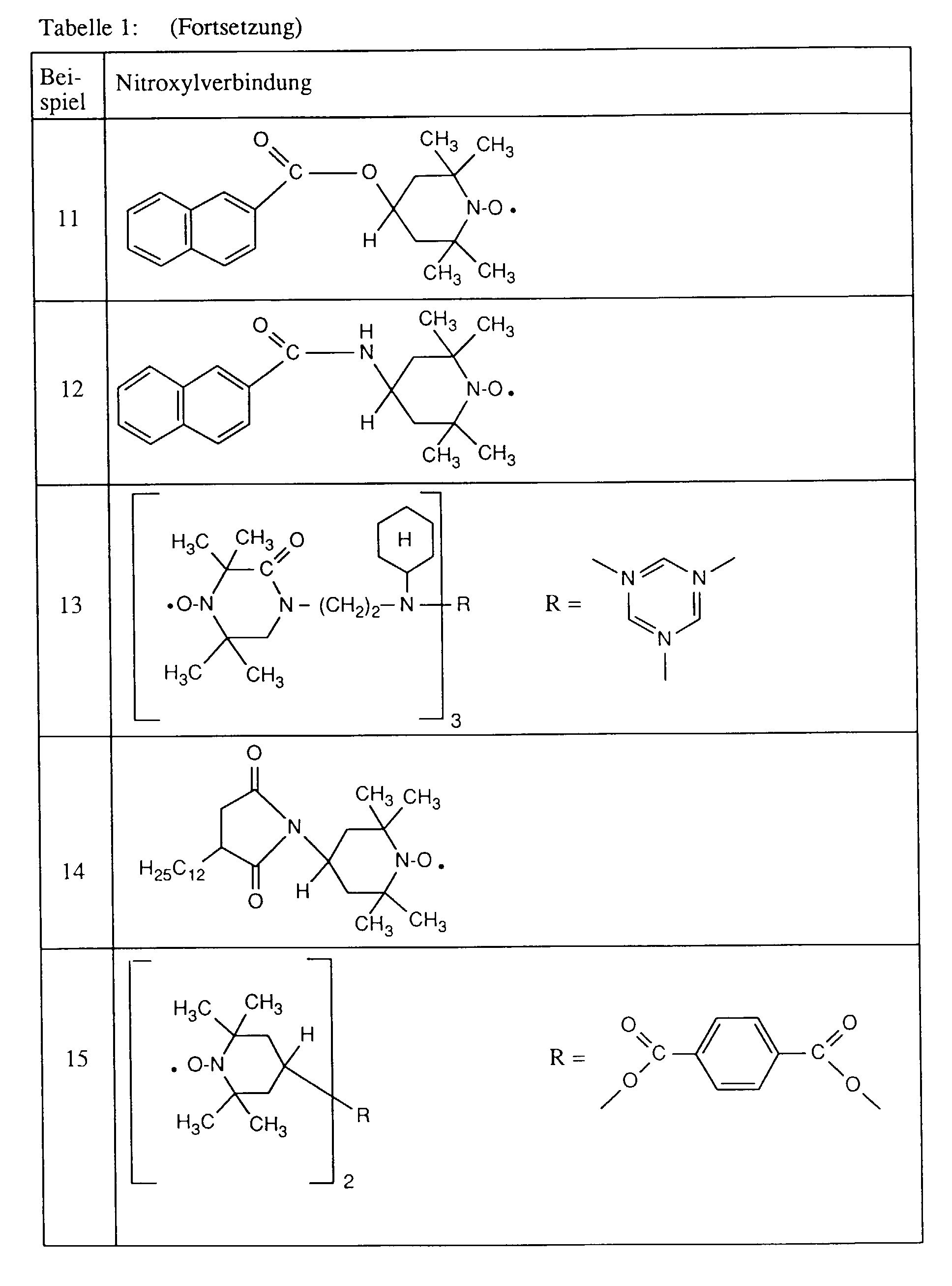

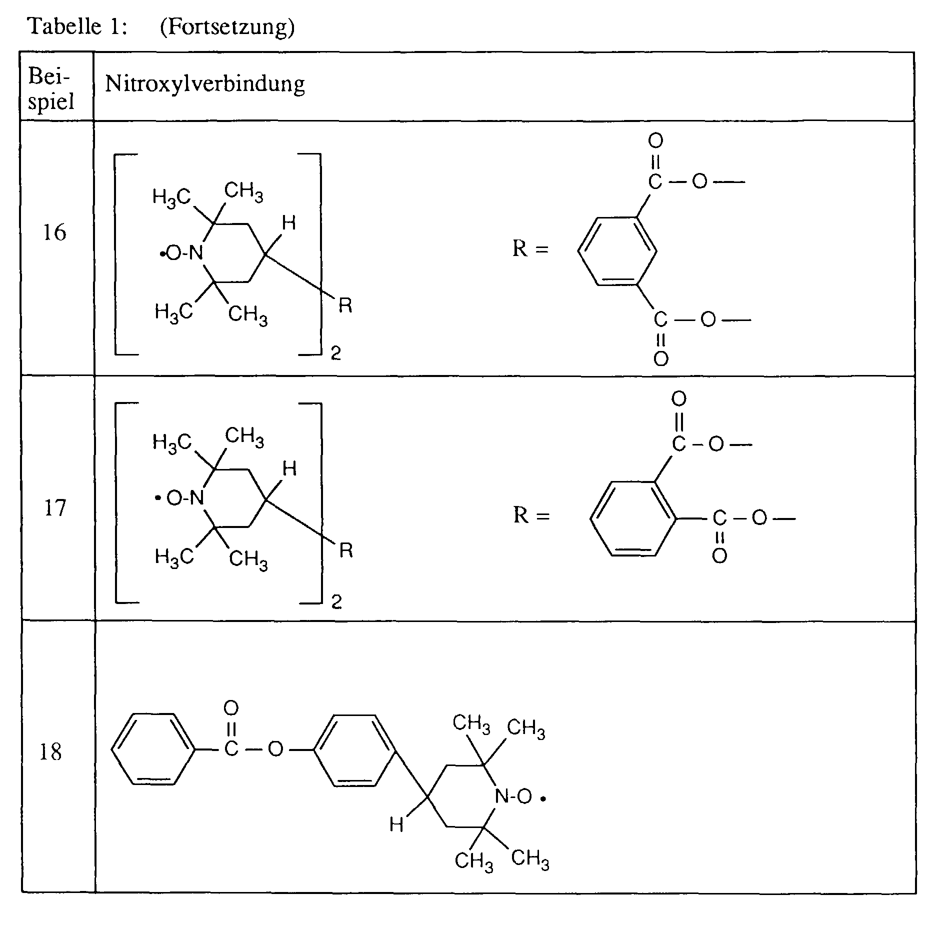

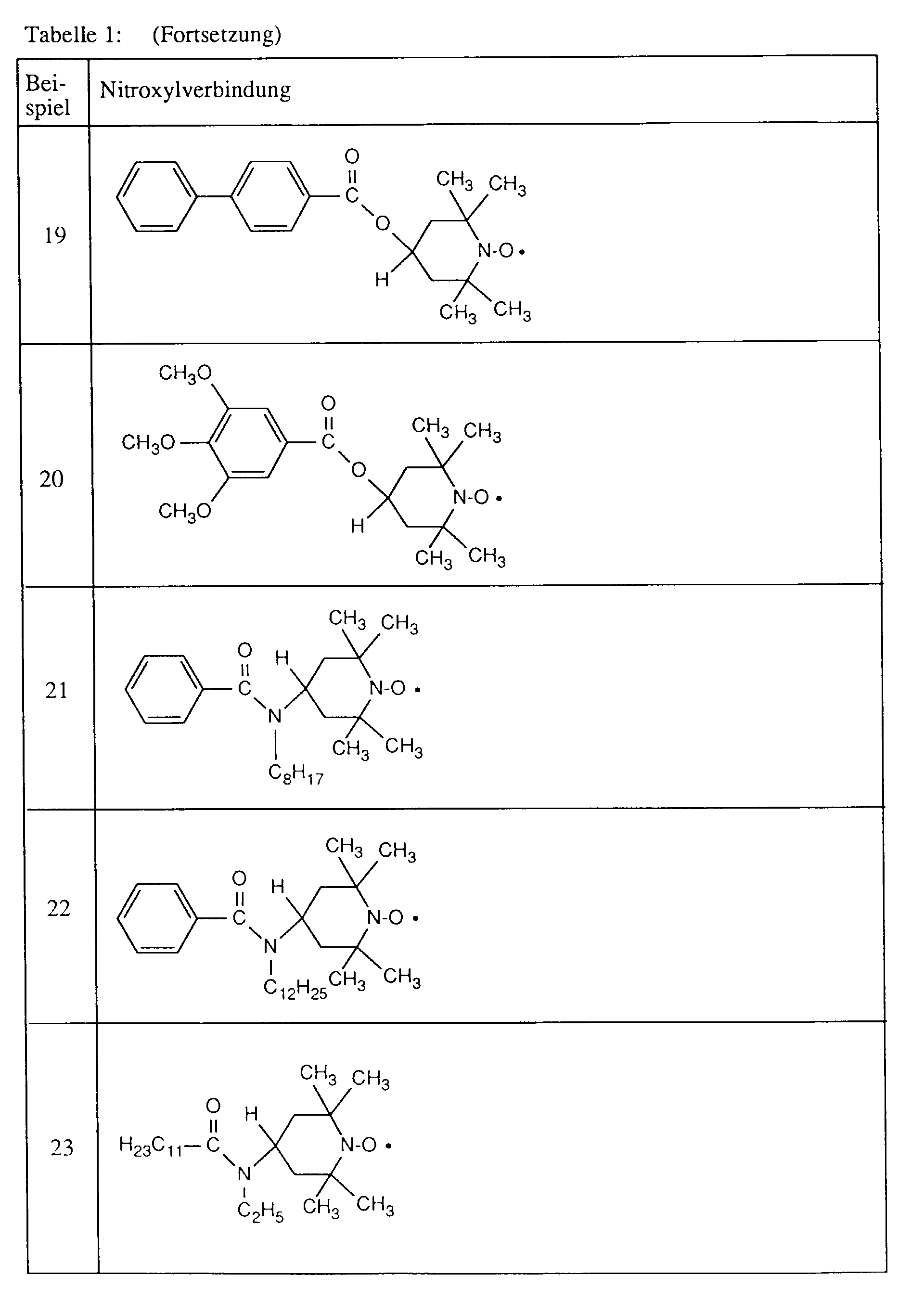

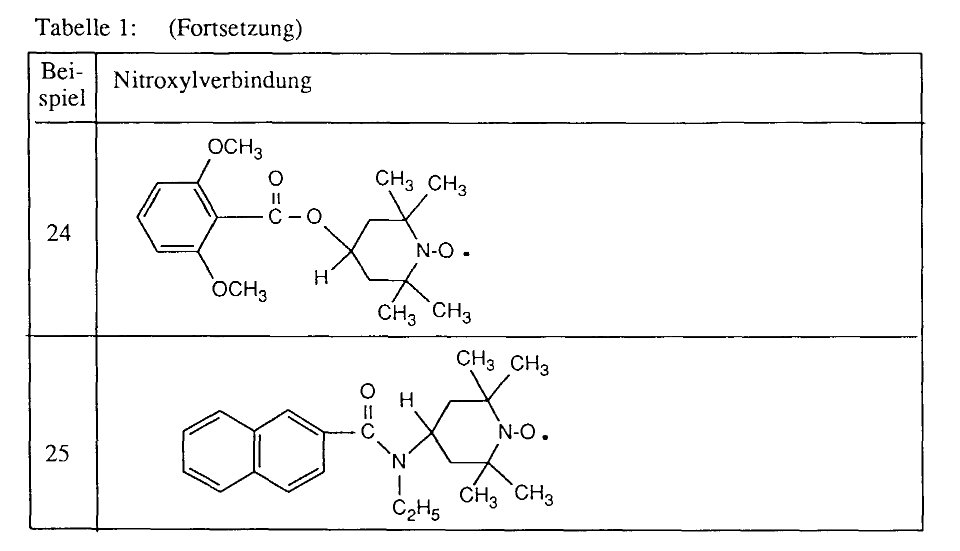

Beispiele 26-30: 0,4 g des Pigments der Formel VI und 0,04 g der in Tabelle 2 angebebenen Nitroxylverbindungen werden getrennt, aber sonst in der gleichen Weise in demselben Alkyd-Melamin-Einbrennlack (Weissverschnitt), wie in Beispiel 1 eingearbeitet (Methode B). Die Wetterbeständigkeit der erhaltenen Lackausfärbungen wird wie in Beispiel 1 beschrieben bestimmt. Bei allen aufgeführten Beispielen kann eine bessere Wetterbeständigkeit als bei der Kontroll-Lackausfärbung mit demselben Pigment nachgewiesen werden.

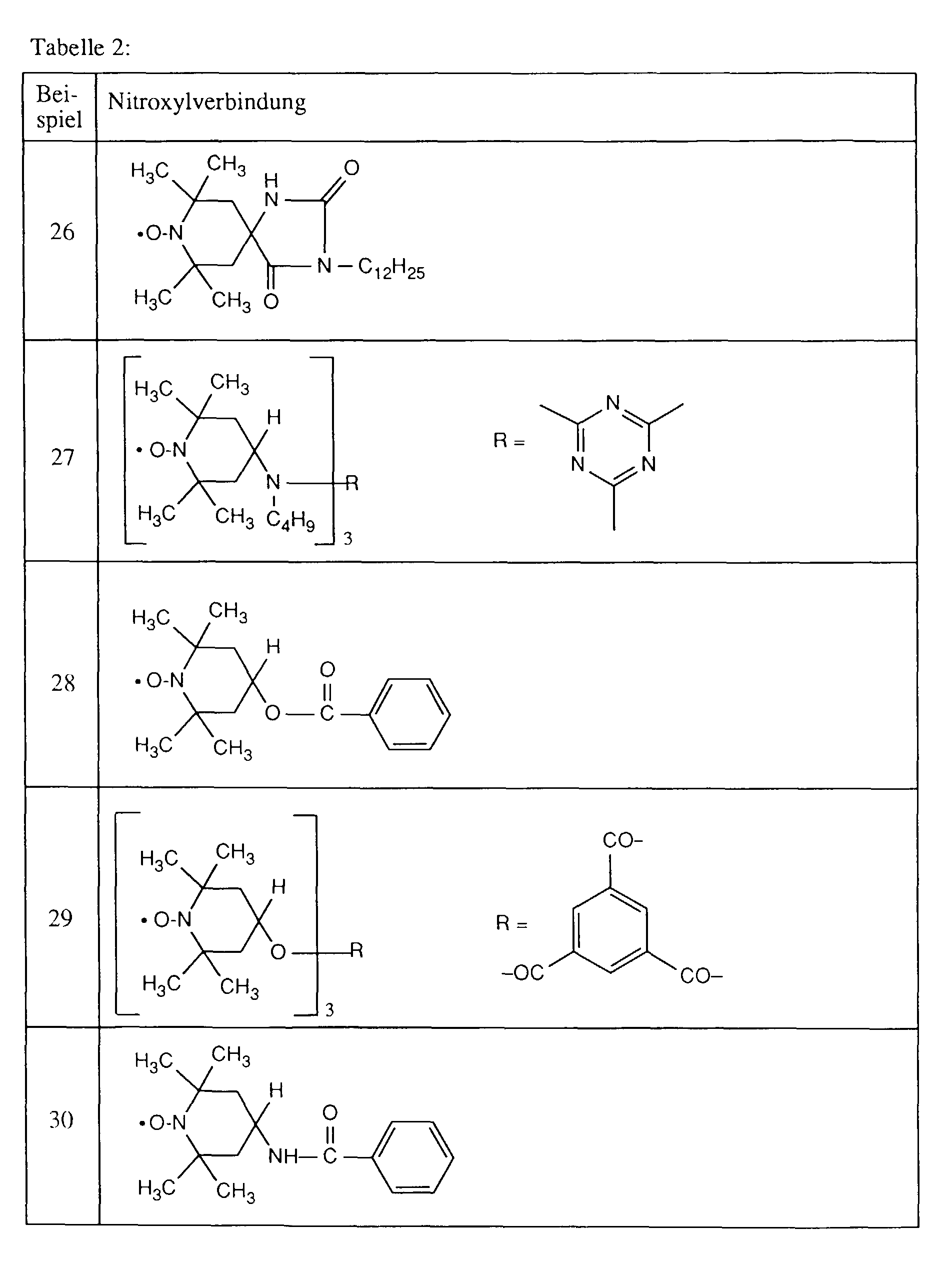

Beispiele 31 und 32: Zu einer Suspension von 2 g des Pigmentes der Formel VI in Methanol werden 0,2 g Nitroxylverbindung der Formel VII gegeben (letztere löst sich dabei im Methanol auf). Nach 2 Stunden Rühren werden 100 ml Wasser zugegeben und die Suspension wird über Nacht bei Zimmertemperatur gerührt. Danach werden noch 200 ml Wasser zugegeben und die Suspension wird filtriert. Der Rückstand wird bei 100°C getrocknet (Methode C).

Das Verfahren wird wiederholt mit der einzigen Ausnahme, dass man anstelle der Nitroxylverbindung der Formel VII die gleiche Gewichtsmenge der in Beispiel 5 beschriebenen Nitroxylverbindungen in 7 ml Chloroform gelöst einsetzt.

Die beiden Produkte werden jeweils in der gleichen Weise in demselben Alkyd-Melamin-Einbrennlack (Weissverschnitt), wie in Beispiel 1 eingearbeitet. Die Wetterbeständigkeit der erhaltenen Lackausfärbungen wird wie in Beispiel 1 beschrieben bestimmt. Bei beiden Beispielen kann eine bessere Wetterbeständigkeit als bei der entsprechenden Kontroll-Lackausfärbung nachgewiesen werden.

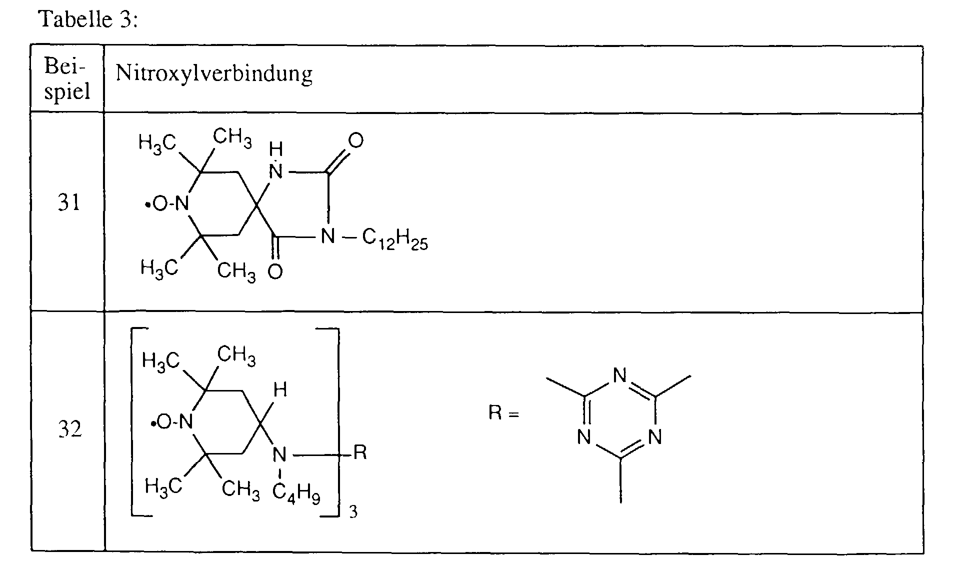

Beispiel 33: 2,65 g der Nitroxylverbindung der Formel VII werden in 25 ml Isopropanol gelöst und die Lösung mit 0,41 ml H₂SO₄ 96 %ig versetzt. Die Mischung wird über Nacht stehen gelassen, dann werden 150 ml Ether zugegeben und der weisse Niederschlag wird filtriert und im Trockenschrank getrocknet.

Beispiel 1 wird dann wiederholt mit der einzigen Ausnahme, dass anstelle der Nitroxylverbindung der Formel VII die gleiche Gewichtsmenge des wie oben beschriebenen erhaltenen Schwefelsäuresalz eingesetzt wird. Man erhält eine bessere Wetterbeständigkeit als in der entsprechenden Kontroll-Lackausfärbung.

Beispiel 34: Beispiel 1 wird wiederholt mit der Ausnahme, dass anstelle des Pigments der Formel VI die gleiche Gewichtsmenge eines Pigments der Formel 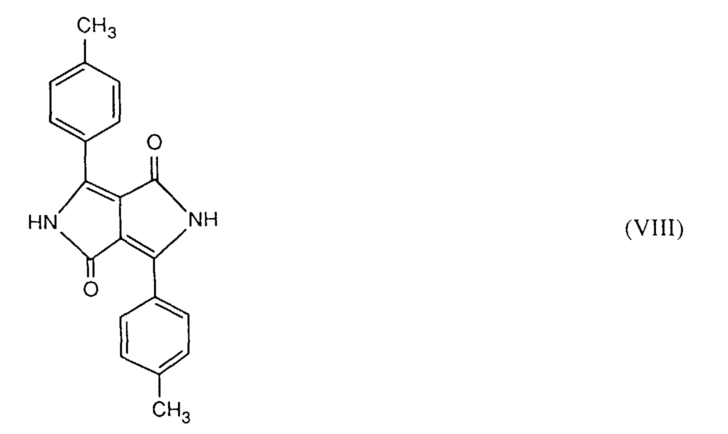 und anstelle der Nitroxylverbindung der Formel VII die gleiche Gewichtsmenge der in Beispiel 2 beschriebenen Nitroxylverbindung eingesetzt werden. Man erhält eine bessere Wetterbeständigkeit als in der entsprechenden Kontroll-Lackausfärbung.

Beispiel 35: Das gemäss Beispiel 34 erhaltene Pigment/Nitroxyl-Gemisch wird wie folgt in einem Volltonlack eingearbeitet:

10 g Pigment/Nitroxyl-Gemisch, 54 g Alkydharz ®ALKYDAL 310 (Bayer AG), 60 %ig in Xylol, 13 g Melaminharz ®CYMEL 327 (Cyanamid), 90 %ig in Butanol, 18 g Xylol, 2 g Butanol, 2 g 1-Methoxy-2-Propanol und 1 g Siliconöl A (1 %ig in Xylol) werden nach üblichen Methoden vermischt. Wie in Beispiel 1 beschrieben wird damit eine Lackausfärbung hergestellt und deren Wetterbeständigkeit bestimmt. Man erhält eine bessere Wetterbeständigkeit als in der entsprechenden Kontroll-Lackausfärbung.

Beispiele 36-49: Beispiel 1 wird wiederholt mit der Ausnahme, dass anstelle des Pigments der Formel XIV die gleiche Gewichtsmenge des Pigments der Formel 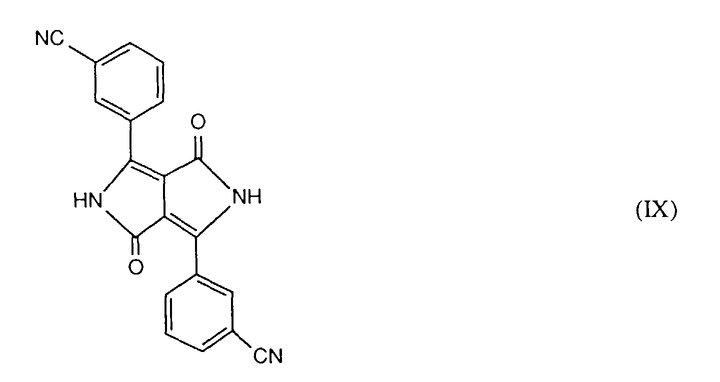 und der in nachfolgender Tabelle 4 angegebenen Nitroxylverbindungen eingesetzt werden. Für sämtliche Beispiele wird eine bessere Wetterbeständigkeit festgestellt, als für die entsprechende Kontroll-Lackausfärbung.

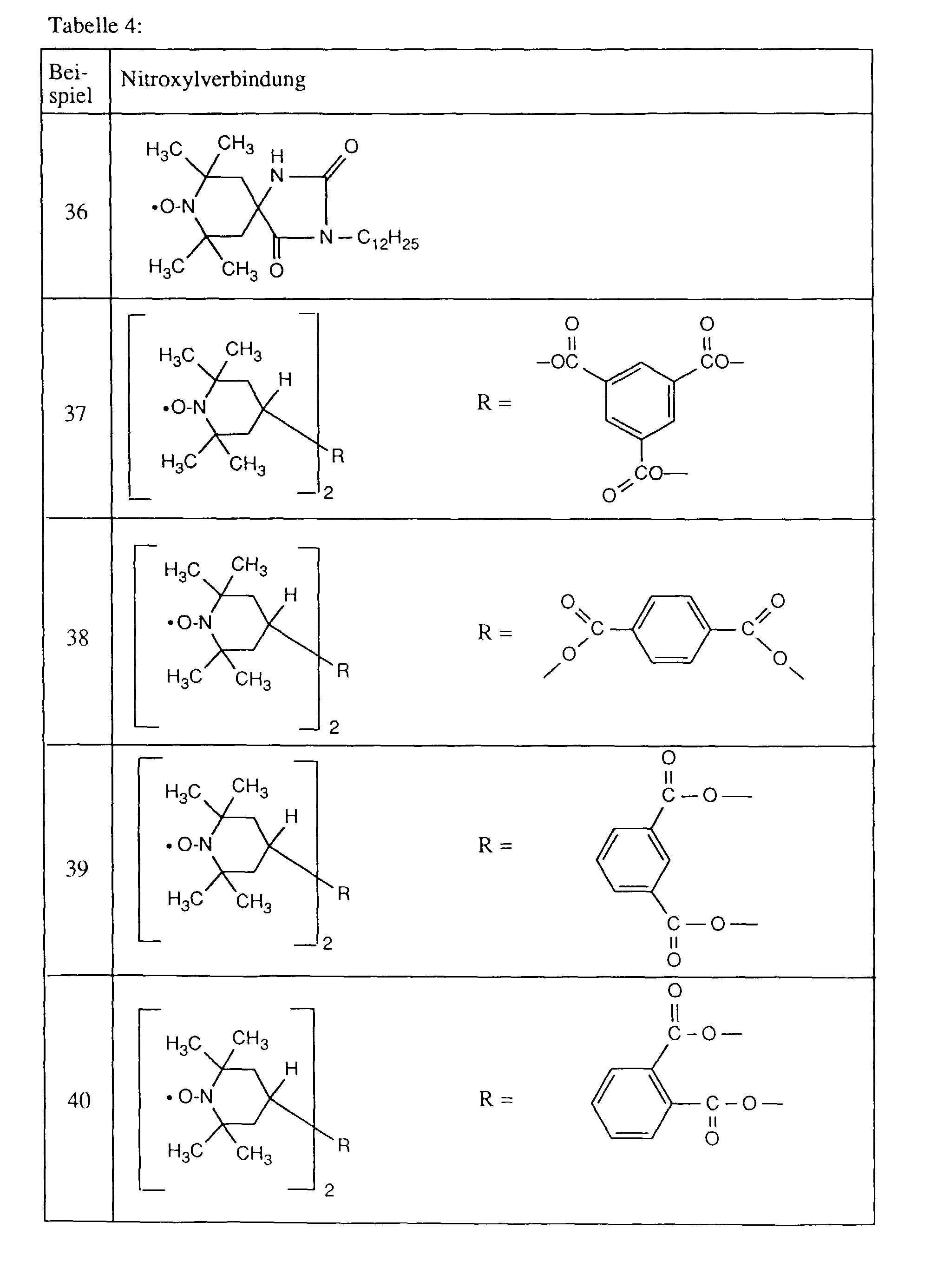

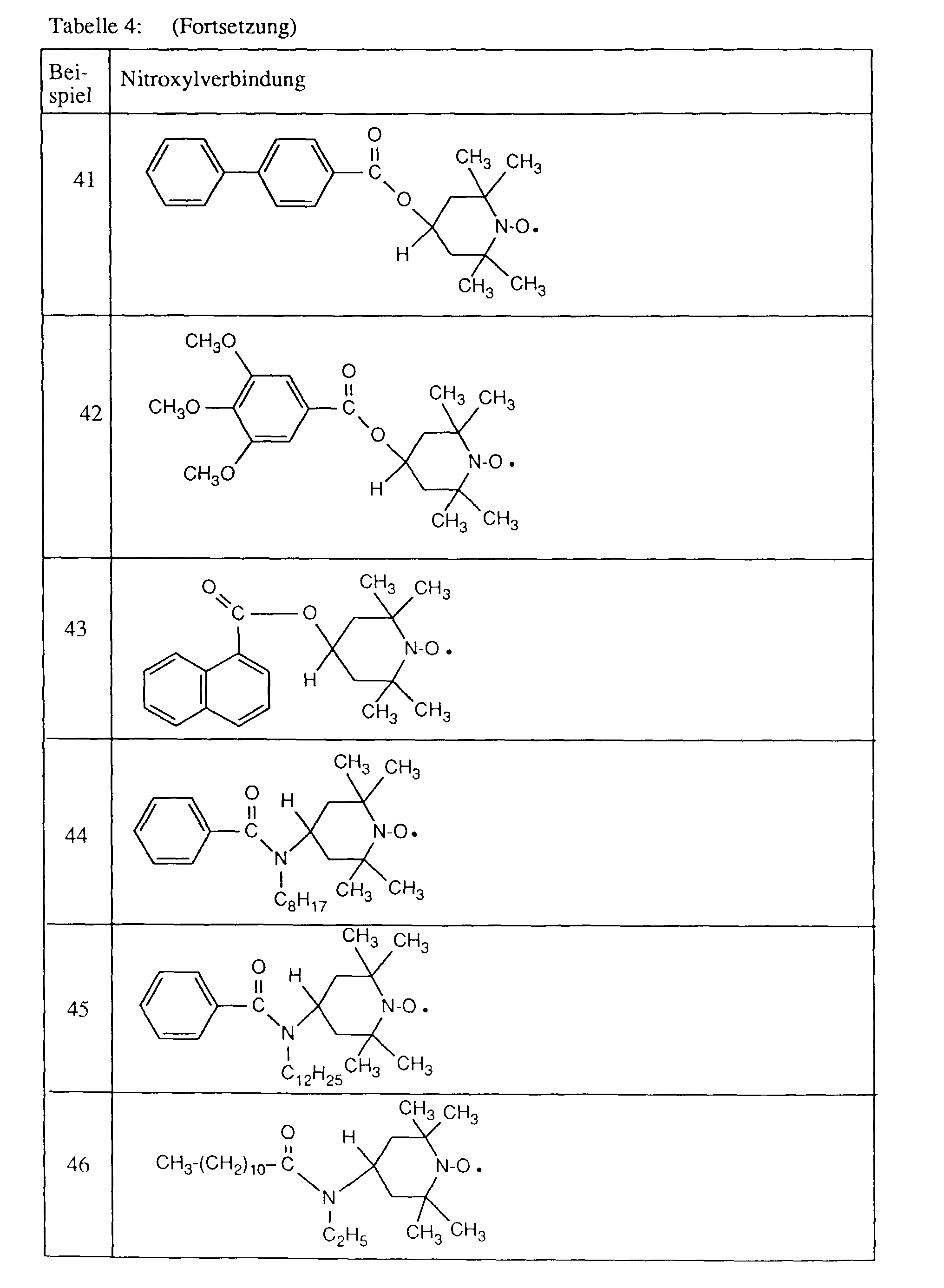

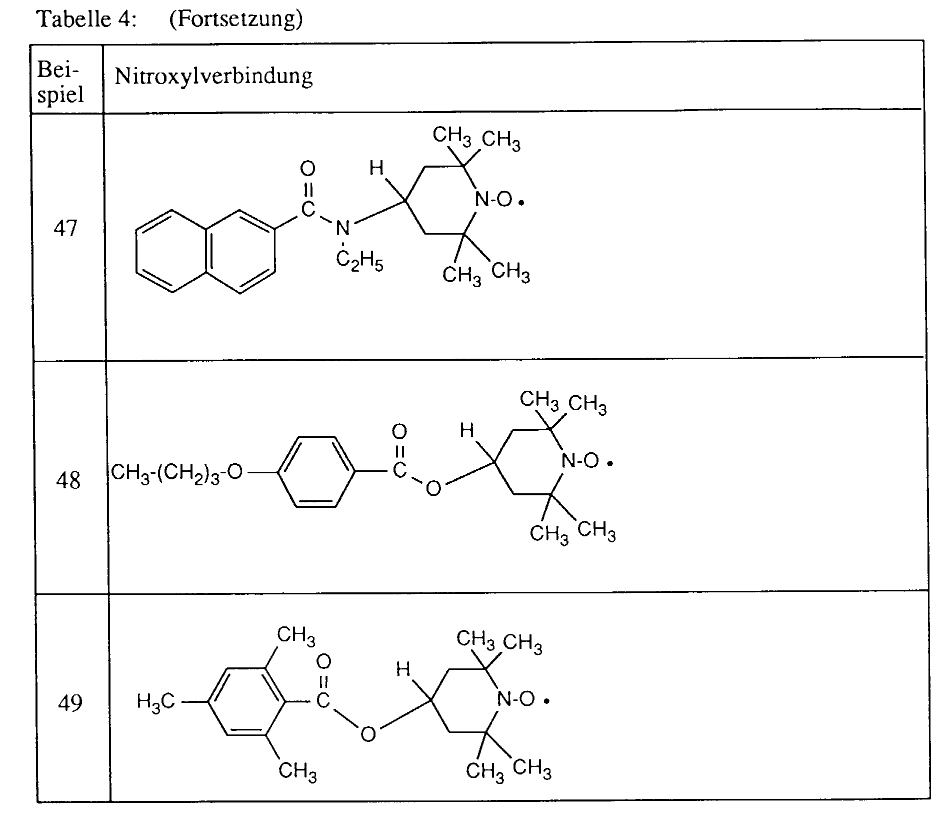

Beispiele 50-64: Beispiel 1 wird wiederholt mit der einzigen Ausnahme, dass die Nitroxylverbindung der Formel VII jeweils in der in der nachfolgenden Tabelle 5 angegebenen Gewichtsmenge, in % bezogen auf das Pigment, eingesetzt wird. Die Resultate sind in Tabelle 5 wiedergegeben.

**Tabelle 5:**

| Beispiel | % Nitroxylverbindung |
|---|---|
| 50 | 1 |
| 51 | 2 |
| 52 | 5 |
| 53 | 10 |
| 54 | 15 |
| 55 | 20 |
| 56 | 25 |
| 57 | 30 |
| 58 | 40 |
| 59 | 50 |
| 60 | 60 |
| 61 | 70 |
| 62 | 80 |
| 63 | 90 |
| 64 | 100 |

### Beispiele 65-68:

| Lösung A | |
|---|---|
| Formulierung: | |
| 67,1 Teile A1 | 8,2 %ige Lösung von 86 Teilen Celluloseacetobutyrat (25%ig in Butylacetat), 4 Teilen Zirkoniumoctoat, 48 Teilen SOLVESSO 150® (aromatisches Lösungsmittel von ESSO), 70 Teilen Butylacetat und 52 Teilen Xylol; |
| 24,8 Teile A2 | Polyesterharz DYNAPOL H 700® (60%ig, von Dynamit Nobel); |
| 3,1 Teile A3 | Melaminharz MAPRENAL MF 650® (55%ig, von hoechst AG). |

| Dispersion B | |
|---|---|
| Formulierung: | |
| 12,3 Teile | Alu-Paste Silverline 3334® (Silverline); |
| 8,0 Teile | SOLVESSO 150®; |
| 59,34 Teile | A1; |
| 21,92 Teile | A2; |
| 2,74 Teile | A3. |

Eine 1:1 Mischung aus a) einer nach üblichen Methoden erhaltenen Dispersion von 5 Teilen Pigment der Formel VI und 5 Teilen einer der in Tabelle 6 angegebenen Nitroxylverbindungen in Lösung A und b) der Dispersion B wird mit der Spritzpistole appliziert.
Nach kurzem Ablüften wird ein Klarlack auf Basis eines hitzehärtbaren Acryllacks appliziert und bei 130°C während 30 Minuten eingebrannt. Man erhält eine rote Metalleffektlackierung.

Eine Kontroll-Lackausfärbung wird in der gleichen Weise hergestellt, mit der Ausnahme, dass das Pigment ohne Zusatz von Nitroxylverbindungen eingesetzt wird.

Die Wetterbeständigkeit der erhaltenen Lackausfärbungen wird gemäss WOM-Test nach 2000 Stunden Bewitterung bestimmt.

Sämtliche Beispiele ergeben eine bessere Wetterbeständigkeit, als diejenige der Kontroll-Lackausfärbung.

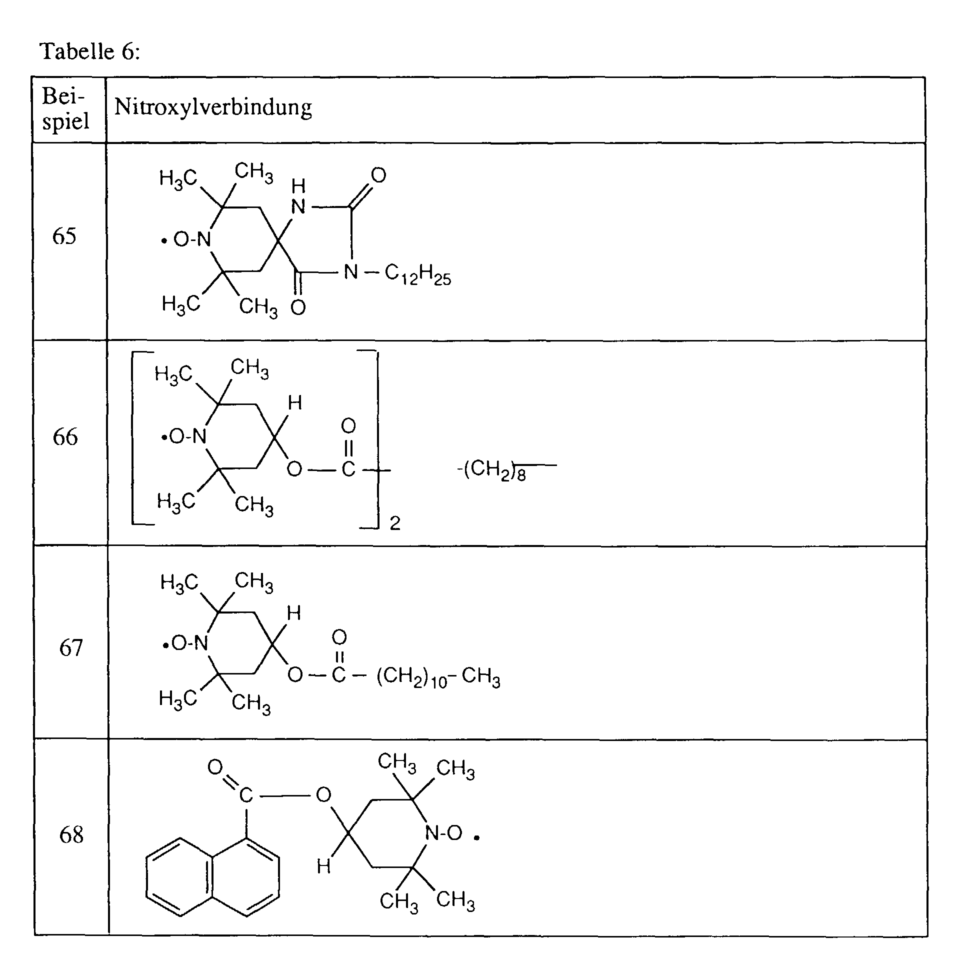

### Beispiele 69-71:

Beispiel 65 wird wiederholt mit der Ausnahme, dass anstelle des Pigments der Formel VI die gleiche Gewichtsmenge des Pigments der Formel IX und der in der nachfolgenden Tabelle 7 angegebenen Nitroxylverbindungen eingesetzt werden. Bei allen Beispielen wird eine bessere Wetterbeständigkeit festgestellt, als bei der entsprechenden Kontroll-Lackausfärbung.

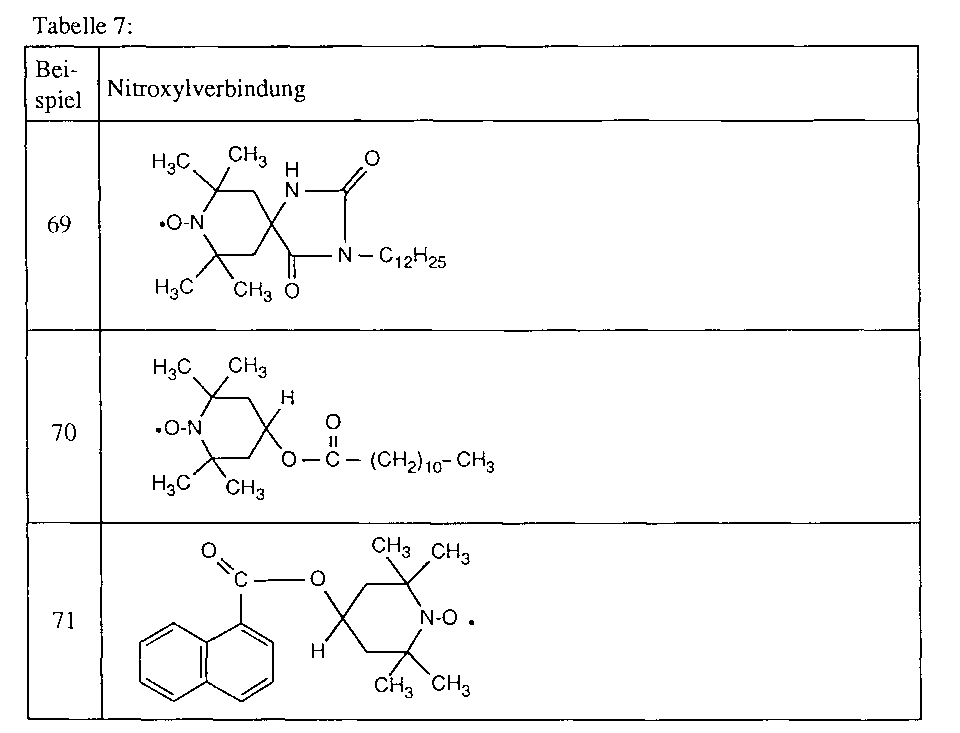

### Beispiele 72-74:

0,5 g Pigment der Formel VI, 0,1 g von einer der in der nachstehenden Tabelle 8 angegebenen Nitroxylverbindungen und 16,2 g einer Nitrocellulosedruckfarbe bestehend aus 11 g Nitrocellulose A 250, 9 g DOWANOL PM® (Dow Chem.), 20 g Essigsäureethylester und 60 g Ethanol werden nach üblichen Methoden vermischt. Die erhaltene Druckfarbe wird auf Papier ausgezogen. Die Lichtbeständigkeit wird gemäss Fadeometer-Test nach 500 Stunden Belichtung bestimmt.

Alle drei Beispiele zeigen eine bessere Lichtechtheit, als die entsprechende Kontrolle, die in der gleichen Weise erhalten wird, jedoch ohne Zugabe der Nitroxylverbindung.

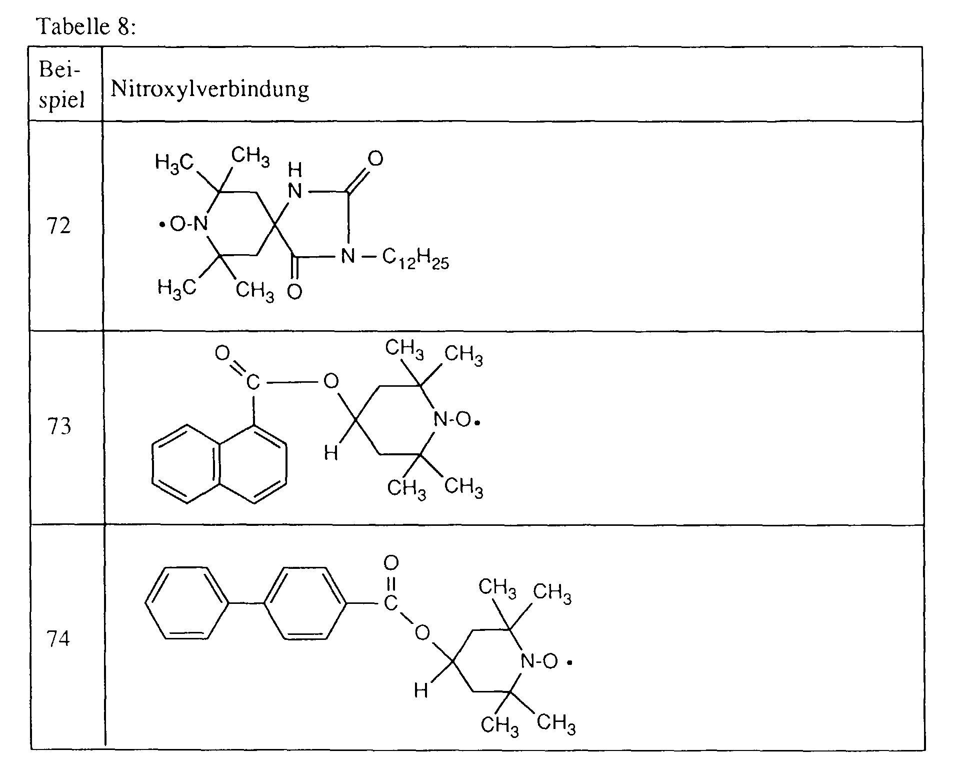

### Beispiele 75-77:

Die Beispiele 72-74 werden wiederholt, mit der einzigen Ausnahme, dass anstelle des Pigments der Formel VI die gleiche Gewichtsmenge des Pigments der Formel IX eingesetzt wird. Auch für diese Beispiele ergibt sich eine bessere Lichtbeständigkeit als bei der entsprechenden Kontroll-Ausfärbung.

### Beispiele 78-80:

0,7 g des Pigments der Formel VI und 0,35 g von einer der in nachstehender Tabelle 9 angegebenen Nitroxylverbindungen werden mit 700 g Polyethylen VESTOLEN A 6016® (Hüls) und 1,4 g Calciumcarbonat MILICARB® trocken vermischt. Die Mischung wird anschliessend in einem Einschneckenextruder zweimal bei 200°C extrudiert. Das so erhaltene Granulat wird auf einer Spritzgussmaschine bei 200°C zu Plättchen verarbeitet. Die Wetterbeständigkeit wird durch Bewitterung der Plättchen, wie in Beispiel 1 für die Lack-Ausfärbungen beschrieben, bestimmt. Auch bei diesen Beispielen erhält man eine bessere Wetterbeständigkeit, als bei der entsprechenden Kontroll-Ausfärbung ohne Nitroxylverbindung.

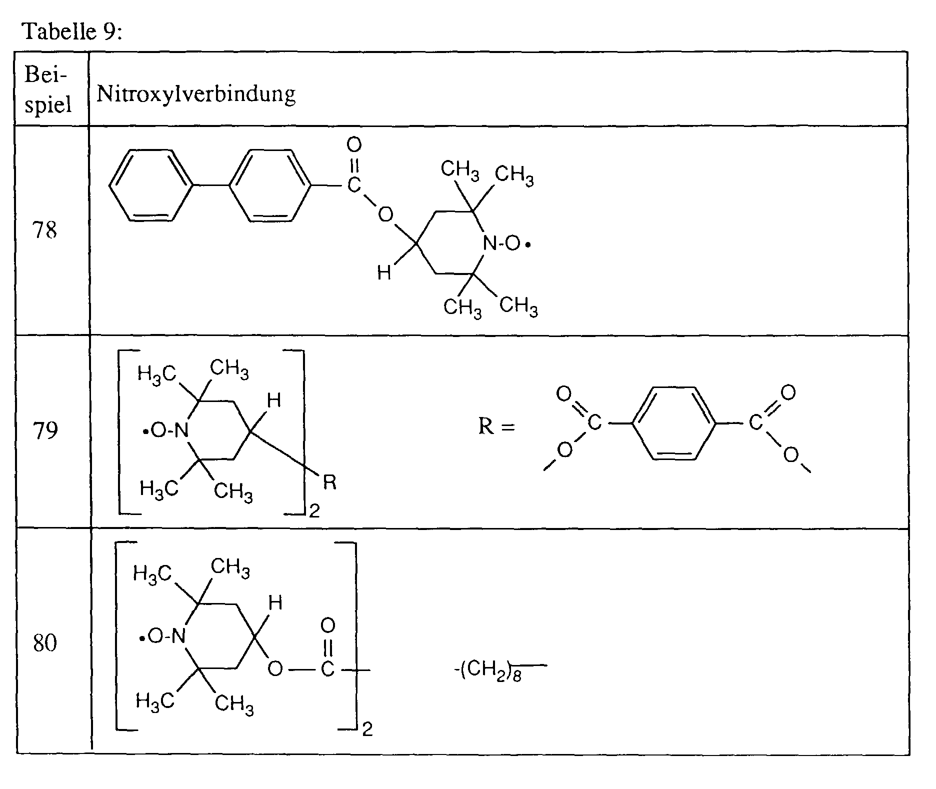

## Patentansprüche

1. Lichtstabilisierte Pigmentzusammensetzungen enthaltend
a) mindestens ein Pyrrolo-[3,4-c]-pyrrolpigment der Formel 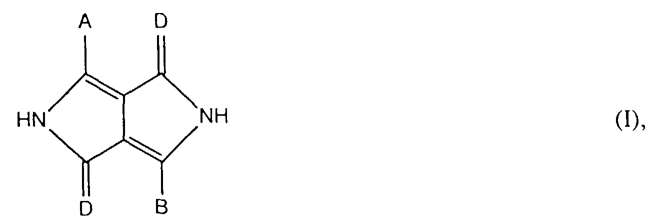 worin A und B unabhängig voneinander isocyclische oder heterocyclische aromatische Reste und D einen Sauerstoff- oder Schwefelatom bedeuten, und
b) 1 bis 100 Gew.%, bezogen auf das Pigment, einer Nitroxylverbindung der Formel 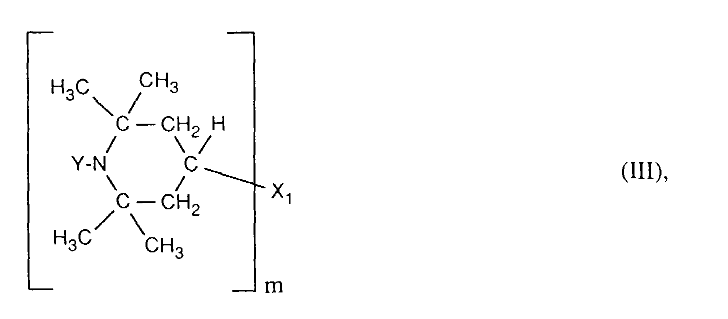 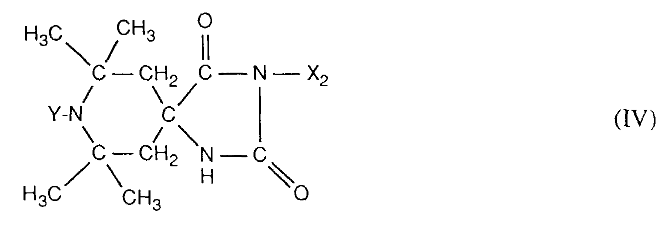 oder 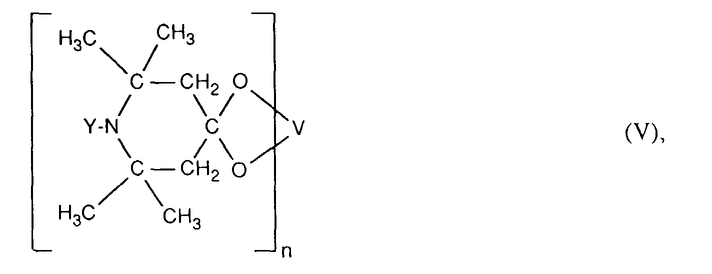 worin
m 1, 2 oder 3 ist,
X₁, bei m = 1, C₁-C₁₈-Alkyl, -OCO-R₁₆, -NR₁₅-COR₁₆ oder 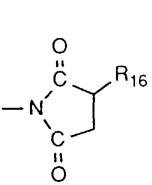 ist, worin
R₁₅ Wasserstoff oder C₁-C₁₈-Alkyl ist und R₁₆ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₁₅CO-(CH₂)ₚ-CONR₁₅-, worin
p eine Zahl zwischen 2 und 8 ist, 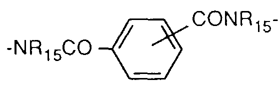 oder 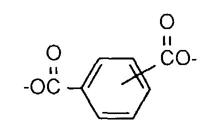 ist und
bei m = 3, eine Gruppe 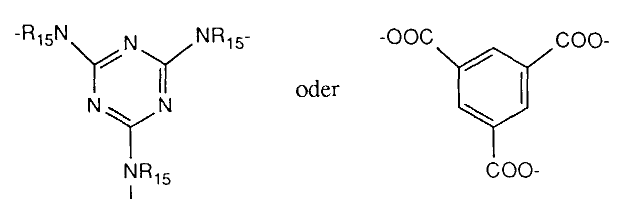 bedeutet,
X₂ C₁-C₁₈-Alkyl ist,
n die Zahl 2,
V die Gruppe (-CH₂)₂C(CH₂-)₂ oder 〉C〈 bedeutet und
Y O• ist oder eines Säureadditionssalzes davon.

2. Pigmentzusammensetzungen gemäss Anspruch 1, dadurch gekennzeichnet, dass das Pigment ein Pyrrolo-[3,4-c]-pyrrol der Formel I ist, worin A und B unabhängig voneinander für eine Gruppe der Formel 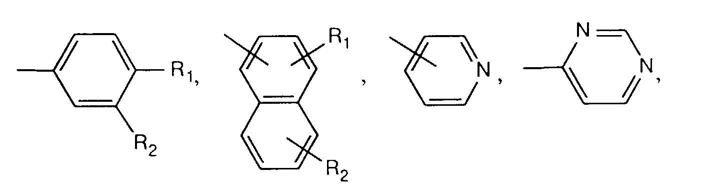 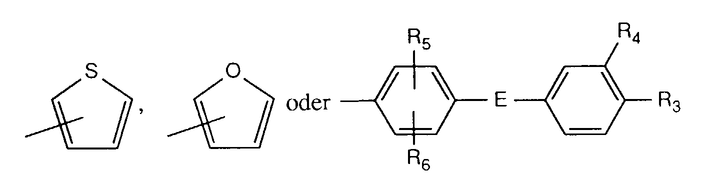 stehen, worin
R₁ und R₂ unabhängig voneinander Wasserstoff, Halogen, C₁-C₆-Alkyl, C₁-C₁₈-Alkoxy, C₁-C₁₈-Alkylmercapto, C₁-C₁₈-Alkylamino, -CN, -NO₂, -Phenyl, Trifluormethyl, C₅-C₆-Cycloalkyl, Imidazolyl, Pyrrazolyl, Triazolyl, Piperazinyl, Pyrrolyl, Oxazolyl, Benzoxazolyl, Benzthiazolyl, Benzimidazolyl, Morpholinyl, Piperidinyl oder Pyrrolidinyl bedeuten,
E -O-, -S-, -SO-, -SO₂- oder -NR₇- ist,
R₃ und R₄ unabhängig voneinander Wasserstoff, Halogen, C₁-C₆-Alkyl, C₁-C₁₈Alkoxy oder -CN sind, R₅ und R₆ unabhängig voneinander Wasserstoff, Halogen oder C₁-C₆-Alkyl und R₇ Wasserstoff oder C₁-C₆-Alkyl bedeuten.

3. Pigmentzusammensetzungen gemäss Anspruch 2, dadurch gekennzeichnet, dass das Pigment ein Pyrrolo-[3,4-c]-pyrrol der Formel I ist, worin A und B unabhängig voneinander eine Gruppe der Formel 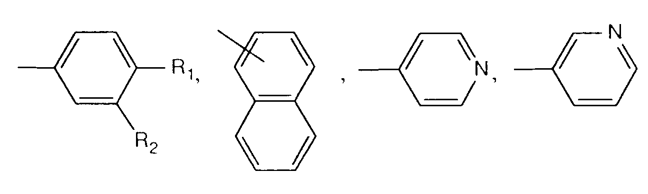 oder 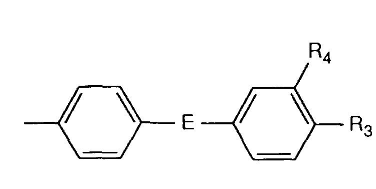 sind,
worin
R₁ und R₂ unabhängig voneinander Wasserstoff, Chlor, Brom, C₁-C₄-Alkyl, C₁-C₆-Alkoxy, C₁-C₆-Alkylamino, CN oder Phenyl bedeuten,
E -O-, -NR₇- oder -SO₂- ist,
R₃ und R₄ Wasserstoff und R₇ Wasserstoff, Methyl oder Ethyl bedeuten und D ein Sauerstoffatom ist.

4. Pigmentzusammensetzungen gemäss Anspruch 2, dadurch gekennzeichnet, dass das Pigment ein Pyrrolo-[3,4-c]-pyrrol der Formel 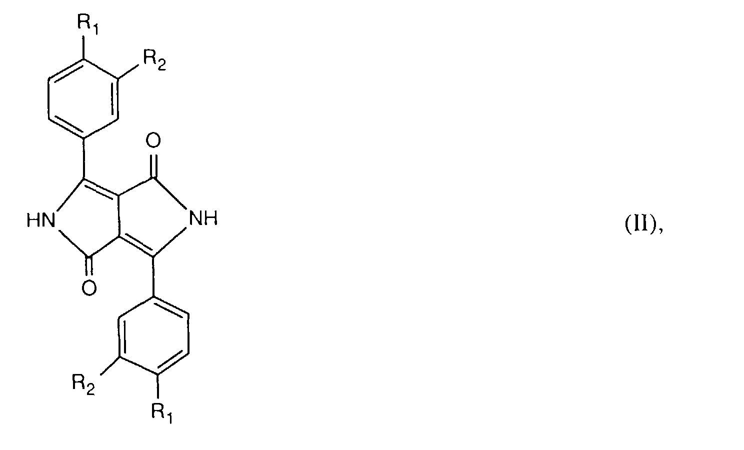 worin R₁ und R₂ unabhängig voneinander Wasserstoff, Methyl, tert.-Butyl, Chlor, Brom, CN oder Phenyl bedeuten.

5. Pigmentzusammensetzungen gemäss Anspruch 1, dadurch gekennzeichnet, dass das Pyrrolo-[3,4-c]-pyrrolpigment in feiner Form mit einer durchschnittlichen Partikelgrösse von 0,005 bis 0,1 µm verwendet wird.

6. Pigmentzusammensetzungen gemäss Anspruch 1, dadurch gekennzeichnet, dass die Nitroxylverbindungen in einer Menge von 5-100 Gew.%, bezogen auf das Pigment, eingesetzt wird.

7. Pigmentzusammensetzungen gemäss Anspruch 1, dadurch gekennzeichnet, dass ein organisches oder anorganisches Salz der Nitroxylverbindung verwendet wird.

8. Pigmentzusammensetzung gemäss Anspruch 1, dadurch gekennzeichnet, dass eine Nitroxylverbindung der Formel III oder IV eingesetzt wird, worin m 1 ist und X₁ Benzoyloxy oder Naphthoyloxy bedeutet und X₂ C₈-C₁₈-Alkyl ist.

9. Verfahren zur Lichtstabilisierung von Pyrrolo-[3,4-c]-pyrrolpigmenten der Formel 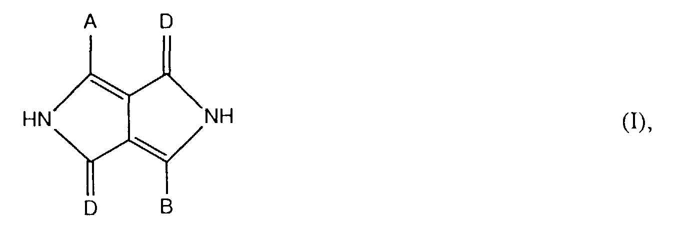 worin A und B unabhängig voneinander isocyclische oder heterocyclische aromatische Reste und D einen Sauerstoff- oder Schwefelatom bedeuten, durch Vermischung oder Beschichtung der Pigmentpartikel mit 1 bis 100 Gew.%, bezogen auf das Pigment, einer Nitroxylverbindung der Formel 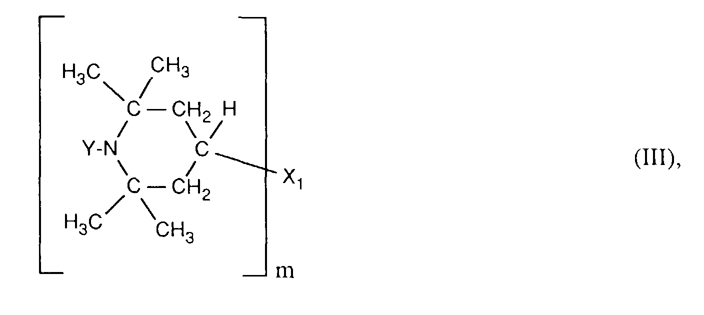 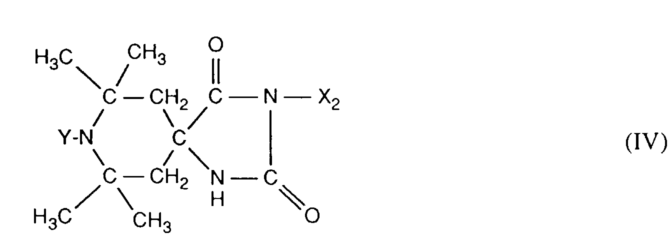 oder 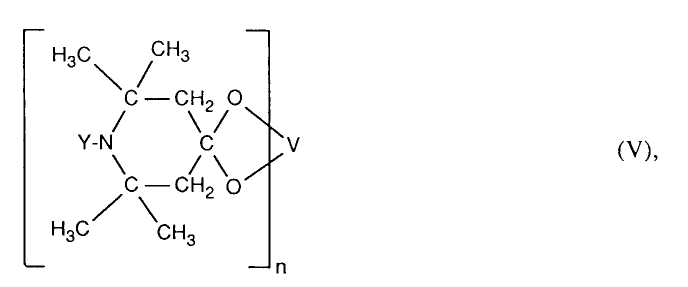 worin
m 1, 2 oder 3 ist,
X₁, bei m = 1, C₁-C₁₈-Alkyl, -OCO-R₁₆, -NR₁₅-COR₁₆ oder 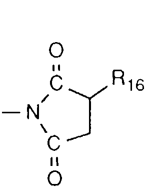 ist, worin
R₁₅ Wasserstoff oder C₁-C₁₈-Alkyl ist und R₁₆ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₁₅CO-(CH₂)ₚ,-CONR₁₅-, worin
p eine Zahl zwischen 2 und 8 ist, 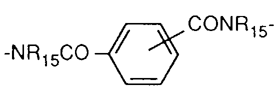 oder 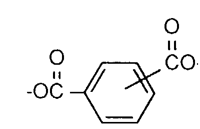 ist und
bei m = 3, eine Gruppe 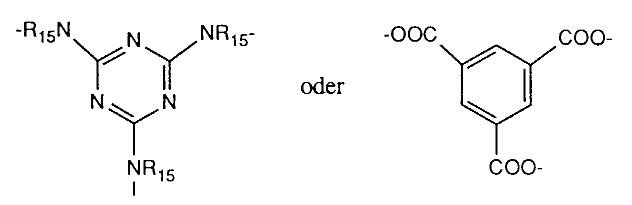 bedeutet,
X₂ C₁-C₁₈-Alkyl ist,
n die Zahl 2,
V die Gruppe (-CH₂)₂C(CH₂-)₂ oder 〉C〈 bedeutet und
Y O• ist oder eines Säureadditionssalzes davon.

10. Hochmolekulares organisches Material enthaltend eine Pigmentzusammensetzung gemäss Anspruch 1.

11. Hochmolekulares organisches Material gemäss Anspruch 10, dadurch gekennzeichnet, dass es sich um einen Lack handelt.

12. Hochmolekulares organisches Material gemäss Anspruch 11, dadurch gekennzeichnet, dass es sich um einen Automobillack handelt.

13. Verwendung von Nitroxylverbindungen der Formeln III, IV oder V wie in Anspruch 1 definiert zur Verbesserung der Licht- und Wetterbeständigkeit von Pyrrolopyrrolpigmenten der Formel 1 gemäss Anspruch 1.

## Claims

1. A light-stabilized pigment composition comprising
a) at least one pyrrolo[3,4-c]pyrrole pigment of the formula 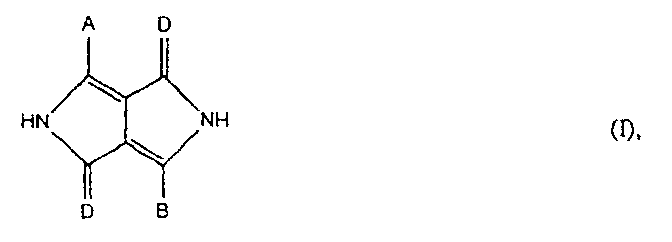 in which A and B, independently of one another, are isocyclic or heterocyclic aromatic radicals, and D is an oxygen or sulfur atom, and
b) from 1 to 100 % by weight, based on the pigment, of a nitroxyl compound of the 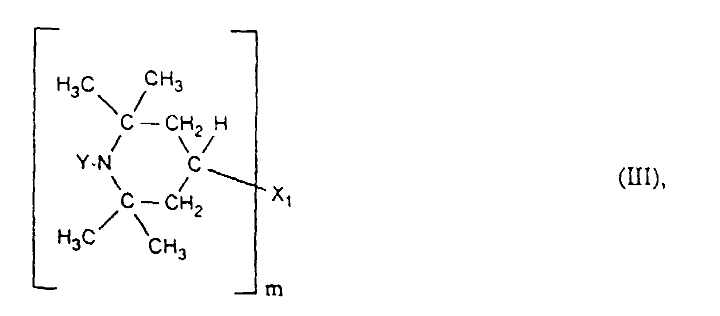 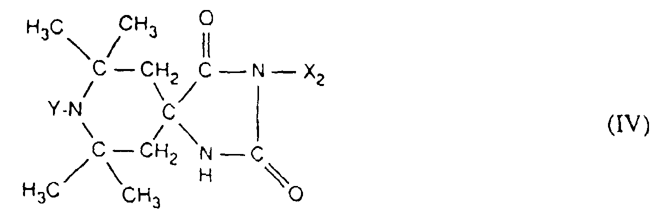 or 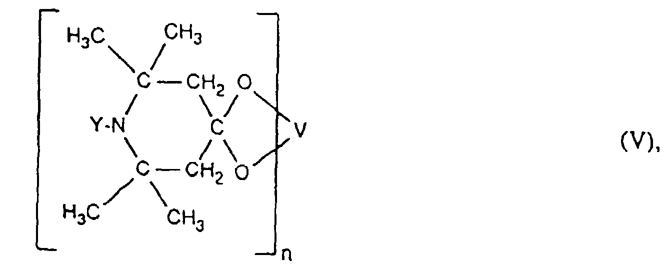
in which
m is 1, 2 or 3,
X₁, if m = 1, is C₁-C₁₈alkyl, -OCO-R₁₆, -NR₁₅-COR₁₆ or 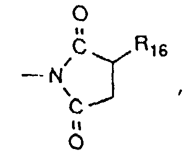 in which R₁₅ is hydrogen or or C₁-C₁₈alkyl,
and R₁₆ is C₁-C₁₈alkyl, or phenyl or naphthyl which is unsubstituted or substituted by C₁-C₄alkyl, C₁-C₄alkoxy, phenyl or halogen,
if m = 2, is a -OCO-(CH₂)ₚ-OCO- or NR₁₅CO-(CH₂)ₚ-CONR₁₅-group in which
p is a number between 2 and 8, 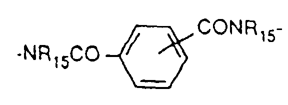 or 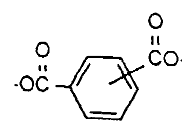 and
if m = 3, is a 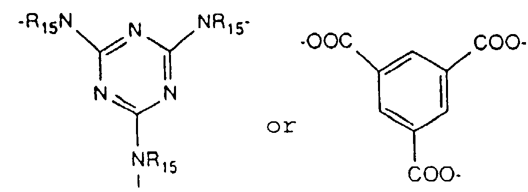 group,
X₂ is C₁-C₁₈alkyl,
n is the number 2,
V is the (-CH₂)₂C(CH₂-)₂ or 〉C〈 group, and
Y is O•, or of an acid-addition salt thereof.

2. A pigment composition according to claim 1, wherein the pigment is a pyrrolo[3,4-c]pyrrole of the formula I in which A and B, independently of one another, are groups of the formula 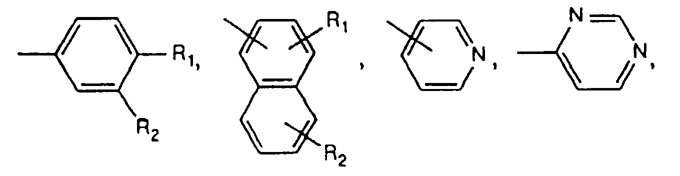 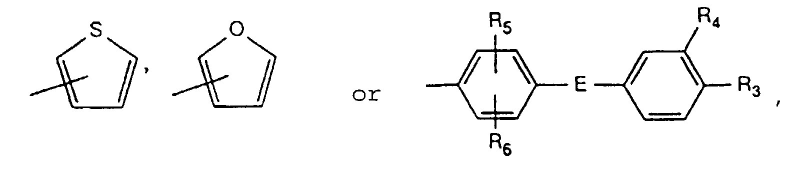 in which
R₁ and R₂, independently of one another, are hydrogen, halogen, C₁-C₆alkyl, C₁-C₁₈alkoxy, C₁-C₁₈alkylmercapto, C₁-C₁₈alkylamino, CN, NO₂, phenyl, trifluoromethyl, C₅-C₆cycloalkyl, imidazolyl, pyrrazolyl, triazolyl, piperazinyl, pyrrolyl, oxazolyl, benzoxazolyl, benzothiazolyl, benzimidazolyl, morpholinyl, piperidinyl or pyrrolidinyl,
E is -O-, -S-, -SO-, -SO₂- or -NR₇-,
R₃ and R₄, independently of one another, are hydrogen, halogen, C₁-C₆alkyl, C₁-C₁₈alkoxy or CN,
R₅ and R₆, independently of one another, are hydrogen, halogen or C₁-C₆alkyl, and
R₇ is hydrogen or C₁-C₆alkyl.

3. A pigment composition according to claim 2, wherein the pigment is a pyrrolo[3,4-c]pyrrole of the formula I in which A and B, independently of one another, are groups of the formula 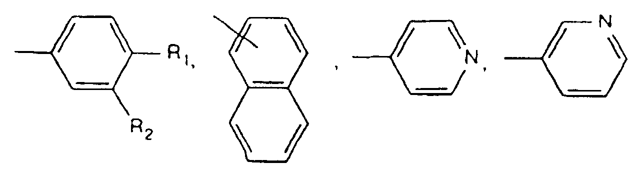 or 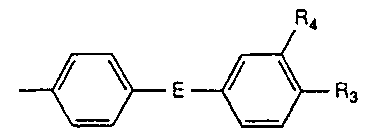 in which
R₁ and R₂, independently of one another, are hydrogen, chlorine, bromine, C₁-C₄alkyl, C₁-C₆alkoxy, C₁-C₆alkylamino, CN or phenyl,
E is -O-, -NR₇- or -SO₂-,
R₃ and R₄ are hydrogen,
R₇ is hydrogen, methyl or ethyl, and
D is an oxygen atom.

4. A pigment composition according to claim 2, wherein the pigment is a pyrrolo[3,4-c]pyrrole of the formula 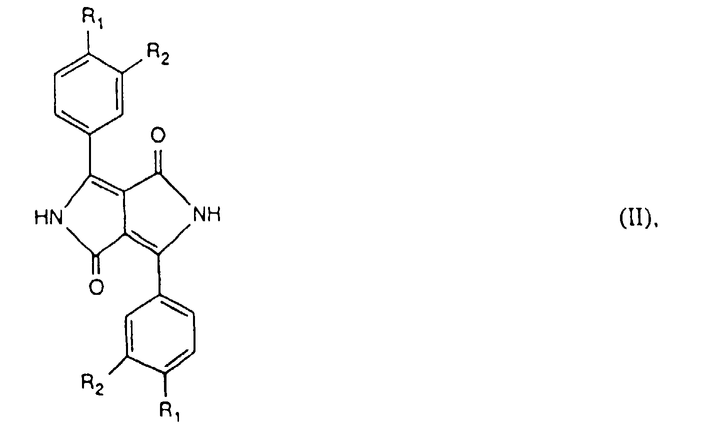 in which R₁ and R₂, independently of one another, are hydrogen, methyl, tert-butyl, chlorine, bromine, CN or phenyl.

5. A pigment composition according to claim 1, wherein the pyrrolo[3,4-c]pyrrole pigment is used in fine form having a mean particle size of from 0.005 to 0.1 µm.

6. A pigment composition according to claim 1, wherein the nitroxyl compound is employed in an amount of 5-100 % by weight, based on the pigment.

7. A pigment composition according to claim 1, wherein an organic or inorganic salt of the nitroxyl compound is used.

8. A pigment composition according to claim 1, wherein a nitroxyl compound of the formula III or IV in which m is 1, X₁ is benzoyloxy or naphthyloxy, and X₂ is C₈-C₁₈alkyl, is employed.

9. A process for the light-stabilisation of pyrrolo[3,4-c]pyrrole pigments of the formula 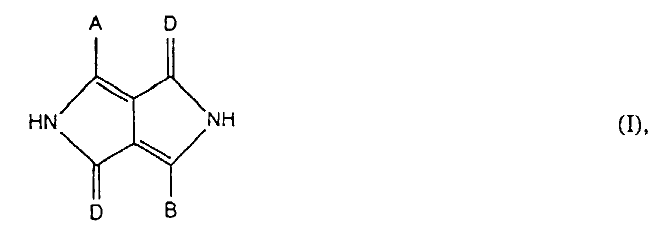 in which A and B, independently of one another, are isocyclic or heterocyclic aromatic radicals, and D is an oxygen or sulfur atom,
by mixing or coating the pigment particles with from 1 to 100 % by weight, based on the pigment, of a nitroxyl compound of the 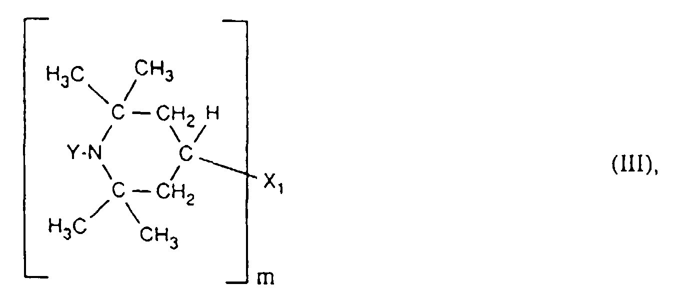 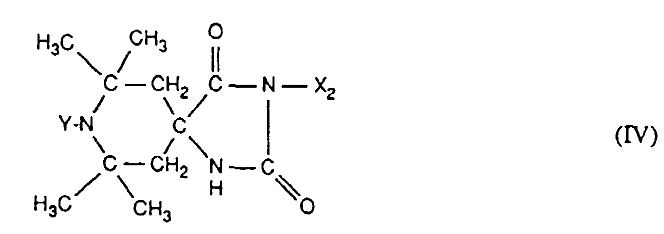 or 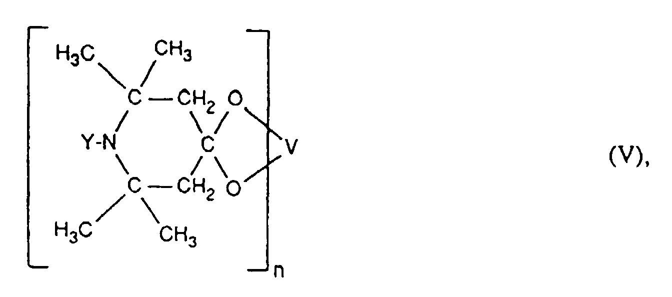 in which
m is 1, 2 or 3,
X₁, if m = 1, is C₁-C₁₈alkyl, -OCO-R₁₆, -NR₁₅-COR₁₆ or 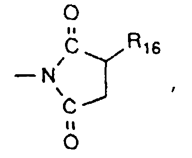 in which R₁₅ is hydrogen or or C₁-C₁₈alkyl,
and R₁₆ is C₁-C₁₈alkyl, or phenyl or naphthyl which is unsubstituted or substituted by C₁-C₄alkyl, C₁-C₄alkoxy, phenyl or halogen,
if m = 2, is a -OCO-(CH₂)ₚ-OCO- or NR₁₅CO-(CH₂)ₚ-CONR₁₅-group in which p is a number between 2 and 8, 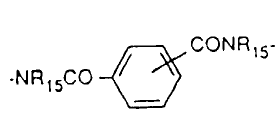 or 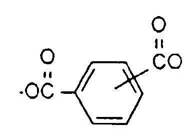 and
if m = 3, is a 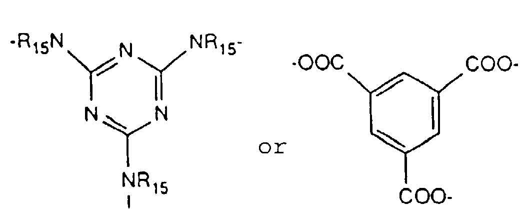 group,
X₂ is C₁-C₁₈alkyl,
n is the number 2,
V is the (-CH₂)₂C(CH₂-)₂ or 〉C〈 group, and
Y is O•, or of an acid-addition salt thereof.

10. A high-molecular-weight organic material containing a pigment composition according to claim 1.

11. A high-molecular-weight organic material according to according to claim 10, in the form of a paint.

12. A high-molecular-weight organic material according to claim 11, in the form of an automotive paint.

13. The use of nitroxyl compounds of the formulae III, IV or V as defined in claim 1 for improving the light stability and weathering resistance of pyrrolopyrrole pigments of the formula I according to claim 1.

## Revendications

1. Compositions pigmentaires stabilisées contre la lumière contenant
a) au moins un pigment de pyrrolo-[3,4-c]-pyrrole de formule 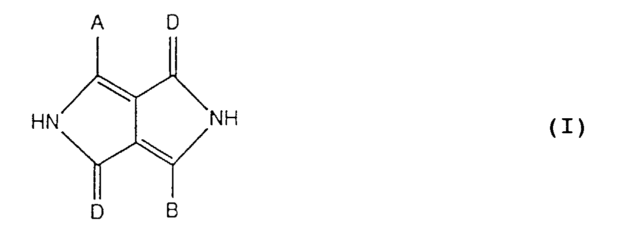 dans laquelle A et B représentent indépendamment l'un de l'autre des restes aromatiques isocycliques ou hétérocycliques et D représente un atome d'oxygène ou de soufre, et
b) de 1 à 100%, par rapport au pigment, d'un composé de nitroxyle de formule 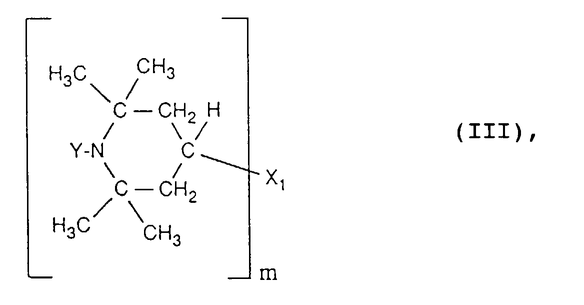 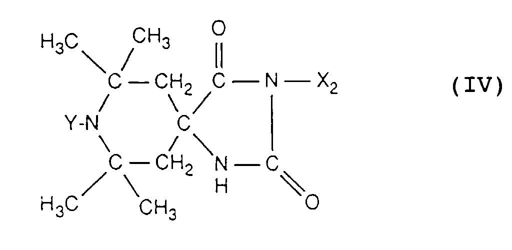 ou 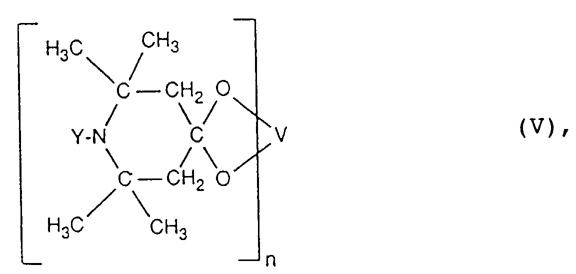 où
m vaut 1, 2 ou 3,
X₁ pour m = 1, représente des groupes alkyle en C₁-C₁₈, -OCO-R₁₆, -NR₁₅-COR₁₆ ou 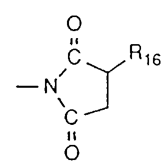 où,
R₁₅ représente un atome d'hydrogène ou un groupe alkyle en C₁-C₁₈, et R₁₆ représente des groupes alkyle en C₁-C₁₈ ou phényle ou naphtyle non substitué ou substitué par des groupes C₁-C₄, alkoxy en C₁-C₄, phényle ou des atomes d'halogènes,
pour m = 2, un groupe -OCO-(CH₂)ₚ-OCO- ou -NR₁₅CO-(CH₂)ₚ-CONR₁₅-, où p est un nombre compris entre 2 et 8, 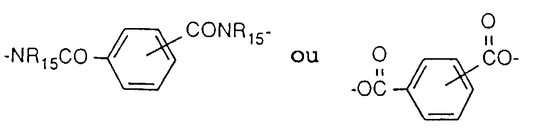 et
pour m = 3, un groupe 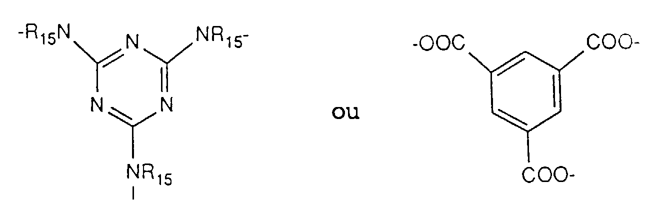
X₂ représente un groupe alkyle en C₁-C₁₈,
n vaut 2,
V représente le groupe -(CH₂)₂C(CH₂-)₂ ou 〉C〈 et
Y représente O^{·} ou un de sels d'addition d'acide.

2. Compositions pigmentaires selon la revendication 1, caractérisées en ce que le pigment est un pigment de pyrrolo-[3,4-c]-pyrrole de formule I, dans laquelle A et B représentent indépendamment l'un de l'autre un groupe de formule 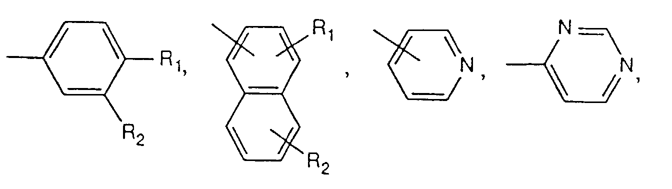 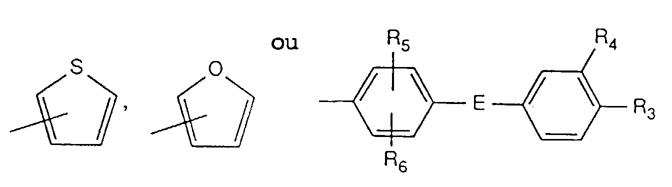 où
R₁ et R₂ représentent indépendamment l'un de l'autre des atomes d'hydrogène, des atomes d'halogènes, des groupes alkyle en C₁-C₆, alkoxy en C₁-C₁₈, (alkyl en C₁-C₁₈)mercapto, (alkyl en C₁-C₁₈)amino, -CN, -NO₂, phényle, trifluorométhyle, cycloalkyle en C₅-C₆, imidazolyle, pyrrazolyle, triazolyle, pipérazinyle, pyrrolyle, oxazolyle, benzoxazolyle, benzothiazolyle, benzimidazolyle, morpholinyle, pipéridinyle ou pyrrolidinyle,
E représente -O-, -S-, -SO-, -SO₂- ou -NR₇-,
R₃ et R₄ représentent indépendamment l'un de l'autre des atomes d'hydrogène, des atomes d'halogènes, des groupes alkyle en C₁-C₆, alkoxy en C₁-C₁₈ ou -CN,
R₅ et R₆ représentent indépendamment l'un de l'autre des atomes d'hydrogène, des atomes d'halogènes ou des groupes alkyle en C₁-C₆ et
R₇ représente des atomes d'hydrogène ou des groupes alkyle en C₁-C₆.

3. Compositions pigmentaires selon la revendication 2, caractérisées en ce que le pigment est un pigment de pyrrolo-[3,4-c]-pyrrole de formule I, dans laquelle A et B représentent indépendamment l'un de l'autre un groupe de formule 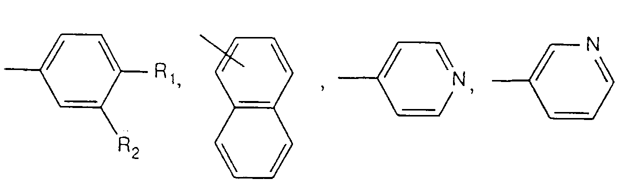 ou 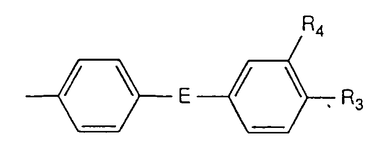 où
R₁ et R₂ représentent indépendamment l'un de l'autre des atomes d'hydrogène, de chlore, de brome, des groupes alkyle en C₁-C₄, alkoxy en C₁-C₆, (alkyl en C₁-C₆)amino, CN ou phényle,
E représente -O-, -NR₇- ou -SO₂-,
R₃ et R₄ représentent des atomes d'hydrogène et
R₇ représente un atome d'hydrogène, un groupe méthyle ou éthyle et D représente un atome d'oxygène.

4. Compositions pigmentaires selon la revendication 2, caractérisées en ce que le pigment est un pigment de pyrrolo-[3,4-c]-pyrrole de formule 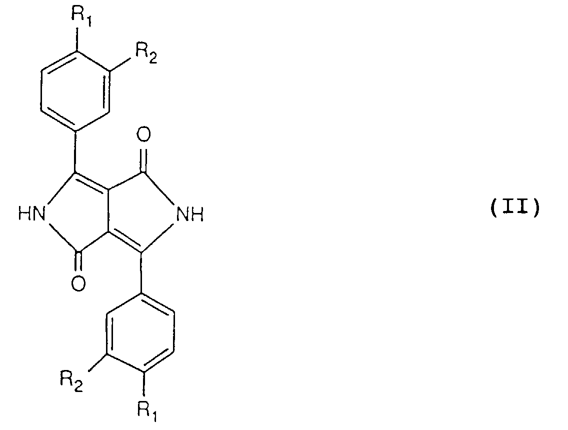 dans laquelle
R₁ et R₂ représentent indépendamment l'un de l'autre des atomes d'hydrogène, des groupes méthyle, tert.-butyle, des atomes de chlore, de brome, des groupes CN ou phényle.

5. Compositions pigmentaires selon la revendication 1, caractérisées en ce que l'on emploie le pigment de pyrrolo-[3,4-c]-pyrrole sous forme finement divisée présentant une granulométrie moyenne de 0,005 à 0,1 µm.

6. Compositions pigmentaires selon la revendication 1, caractérisées en ce que l'on emploie le composé de nitroxyle en une quantité de 5 à 100% en masse, par rapport au pigment.

7. Compositions pigmentaires selon la revendication 1, caractérisées en ce que l'on emploie un sel organique ou inorganique d'un composé de nitroxyle.

8. Compositions pigmentaires selon la revendication 1, caractérisées en ce que l'on emploie un composé de nitroxyle de formule III ou IV, dans laquelle m vaut 1 et X₁ représente un groupe benzyloxy ou naphtyloxy et X₂ représente un groupe alkyle en C₈-C₁₈.

9. Procédé de stabilisation des pigments de pyrrolo-[3,4-c]-pyrrole de formule 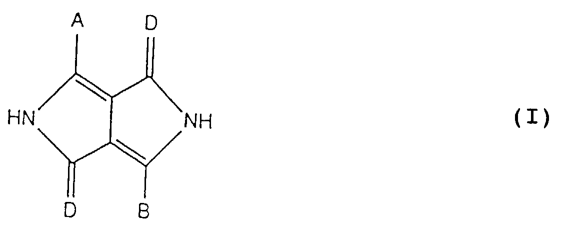 dans laquelle A et B représentent indépendamment l'un de l'autre des restes isocycliques ou hétérocycliques et D représente un atome d'oxygène ou de soufre, par mélange ou revêtement des particules de pigment avec 1 à 100% en masse, par rapport au pigment, d'un composé de nitroxyle de formule 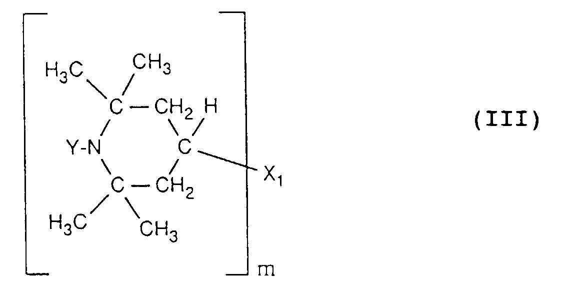 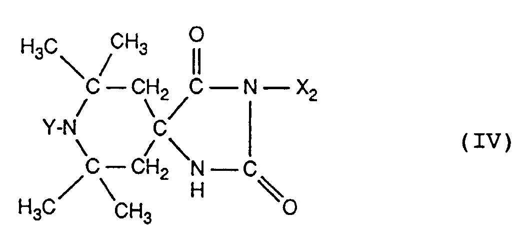 ou 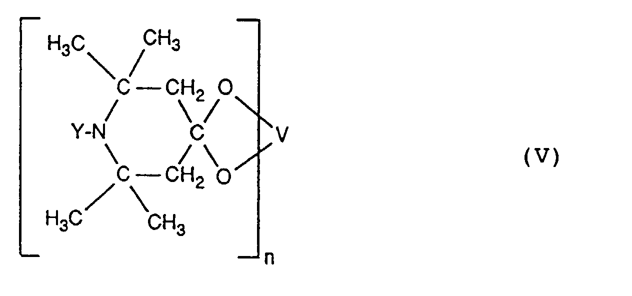 où
m vaut 1,2 ou 3,
m vaut 1, 2 ou 3,
X₁, pour m = 1, représente des groupes alkyle en C₁-C₁₈, -OCO-R₁₆, -NR₁₅-COR₁₆ ou 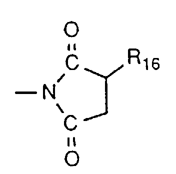 où
R₁₅ représente un atome d'hydrogène ou un groupe alkyle en C₁-C₁₈, et R₁₆ représente des groupes alkyle en C₁-C₁₈ ou phényle ou naphtyle non substitué ou substitué par des groupes alkyle en C₁-C₄, alkoxy en C₁-C₄, phényle ou des atomes d'halogènes,
pour m = 2, un groupe -OCO-(CH₂)ₚ-OCO- ou -NR₁₅CO-(CH₂)ₚ-CONR₁₅-, où p est un nombre compris entre 2 et 8, 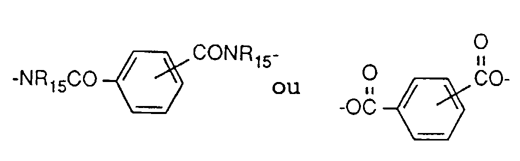 et
pour m = 3, un groupe 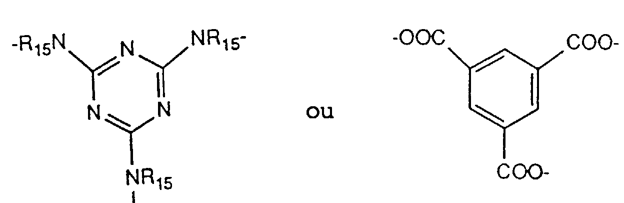
X₂ représente un groupe alkyle en C₁-C₁₈,
n vaut 2,
V représente le groupe -(CH₂)₂C(CH₂)₂- ou 〉C〈 et
Y représente O^{·} ou un de sels d'addition d'acide.

10. Matière organique de haut poids moléculaire contenant une composition pigmentaire selon la revendication 1.

11. Matière organique de haut poids moléculaire selon la revendication 10, caractérisée en ce qu'il s'agit d'un vernis.

12. Matière organique de haut poids moléculaire selon la revendication 11, caractérisée en ce qu'il s'agit d'un vernis automobile.

13. Utilisation de composés de nitroxyle de formules III, IV ou V comme défini à la revendication 1 en vue d'améliorer la résistance à la lumière et aux intempéries des pigments de pyrrolopyrrole de formule I selon la revendication 1.
